# EUROPEAN PATENT APPLICATION

(11) **EP 4 586 679 A1**
(43) Date of publication of application: **16.07.2025**
(21) Application number: 23862239.3
(22) Date of filing: 30.08.2023
(51) Int. Cl.: H04W 28/02

(54) **INFORMATION PROCESSING METHOD, DEVICE, AND READABLE STORAGE MEDIUM**

(30) Priority: 05.09.2022 CN 202211081007
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Winter, Brandl - Partnerschaft mbB
(86) International application number: PCT/CN2023/115666
(87) International publication number: WO 2024/051544

(57) **Abstract**

This application relates to the field of communication technologies. Disclosed are an information processing method, a device, and a readable storage medium. The method includes: acquiring, by a first communication device, a congestion monitoring requirement corresponding to a first QoS flow; and performing, by the first communication device, a first operation according to the congestion monitoring requirement corresponding to the first QoS flow.

## Description

### CROSS-REFERENCE TO RELATED APPLICATIONS

This application claims priority to Chinese Patent Application No. 202211081007.1 filed on Monday, September 5, 2022, which is incorporated herein by reference in its entirety.

### TECHNICAL FIELD

Embodiments of this application relate to the field of wireless communication technologies, and in particular, to an information processing method, a device, and a readable storage medium.

### BACKGROUND

An external application or terminal may order congestion status information (for example, congestion start, a congestion technique, and a congestion level) of a service data flow from a 5G system (5th Generation System, 5GS).

However, a core network of the 5GS is managed based on a quality of service (Quality of Service, QoS) flow. A radio access network of the 5GS is scheduled based on a radio channel (for example, a data radio bearer (Data Radio Bearer, DRB), and a logical channel (Logical channel, LCH)). One or more QoS flows may be mapped to the radio channel, and one or more service data flows may be mapped to one QoS flow. In the related art, a RAN is required to report a congestion in each QoS flow. However, a specific information processing method is still unclear at present.

### SUMMARY

Embodiments of this application provide an information processing method, a device, and a readable storage medium, to resolve the problem that a related information processing method is still unclear at present.

According to a first aspect, an information processing method is provided, and applied to a first communication device. The method includes:
acquiring, by the first communication device, a congestion monitoring requirement corresponding to a first quality of service QoS flow; and
performing, by the first communication device, a first operation according to the congestion monitoring requirement corresponding to the first QoS flow, where
the first operation includes one or more of the following:
monitoring a congestion status of a first object;
using the congestion status of the first object as a congestion status of the first QoS flow;
reporting the congestion status of the first object or reporting the congestion status of the first QoS flow through signaling corresponding to the first QoS flow and/or a data packet in the first QoS flow;
mapping the first QoS flow to a first radio bearer; and
sending a first requirement, where
the first requirement is an uplink congestion monitoring requirement corresponding to the first QoS flow, and/or, the first requirement is configured for requiring one or more of the following:
monitoring and/or reporting an uplink congestion status of a second object;
reporting the uplink congestion status of the second object through signaling corresponding to a third object and/or a data packet in the third object; and
using a congestion status of the second object as a congestion status of the third object, where
the first object includes one or more of the following:
the first QoS flow;
the first radio bearer;
a first logical channel;
a first logical channel group;
a first cell; and
the first communication device or a first radio access network RAN network element;
the second object includes one or more of the following:
the first QoS flow;
the first radio bearer;
the first logical channel; and
the first logical channel group; and
the third object includes one or more of the following:
the first QoS flow;
the first radio bearer;
the first logical channel; and
the first logical channel group.

According to a second aspect, an information processing method is provided, and applied to a second communication device. The method includes:
acquiring, by the second communication device, a first requirement; and
performing, by the second communication device, a second operation according to the first requirement, where
the first requirement is an uplink congestion monitoring requirement corresponding to a first QoS flow, and/or, the first requirement is configured for requiring one or more of the following:
monitoring and/or reporting an uplink congestion status of a second object;
using a congestion status of the second object as a congestion status of a third object; and
reporting the uplink congestion status of the second object or reporting the congestion status of the third object through signaling corresponding to the third object and/or a data packet in the third object;
the second operation includes one or more of the following:
monitoring the uplink congestion status of the second object;
using the uplink congestion status of the second object as an uplink congestion status of the third object; and
reporting the uplink congestion status of the second object or reporting the uplink congestion status of the third object through the signaling corresponding to the third object and/or the data packet in the third object;
the second object includes one or more of the following:
the first QoS flow;
a first radio bearer;
a first logical channel; and
a first logical channel group; and
the third object includes one or more of the following:
the first QoS flow;
the first radio bearer;
the first logical channel; and
the first logical channel group.

According to a third aspect, an information processing method is provided, and applied to a third communication device. The method includes:
performing, by the third communication device, a third operation, where
the third operation includes one or more of the following:
mapping each QoS flow having a congestion monitoring requirement to an independent fourth object;
determining, based on whether a QoS flow has a congestion monitoring requirement, to map the QoS flow to a same fourth object or different fourth objects;
mapping one or more QoS flows having a congestion monitoring requirement to a same fourth object;
mapping one or more QoS flows having a congestion monitoring requirement to a target fourth object, where a QoS flow having no congestion monitoring requirement does not exist in the target fourth object;
determining and/or saving a congestion monitoring requirement of a fourth object, where the congestion monitoring requirement of the fourth object meets congestion monitoring requirements of all QoS flows mapped to the fourth object, or, is the same as congestion monitoring requirements of all QoS flows mapped to the fourth object; and
using a congestion status of the fourth object to which the QoS flow is mapped as a congestion status of the QoS flow, where
the fourth object includes one or more of the following:
a radio bearer; and
a logical channel.

According to a fourth aspect, an information processing method is provided, and applied to a fourth communication device. The method includes:
performing, by the fourth communication device, a fourth operation, where
the fourth operation includes one or more of the following:
mapping each service data flow having a congestion monitoring requirement to an independent QoS flow;
determining, based on whether a service data flow has a congestion monitoring requirement, to map the service data flow to a same QoS flow or different QoS flows;
mapping one or more service data flows having a congestion monitoring requirement to a same QoS flow;
mapping one or more service data flows having a congestion monitoring requirement to a target QoS flow, where a service data flow having no congestion monitoring requirement does not exist in the target QoS flow;
determining and/or saving a congestion monitoring requirement corresponding to the QoS flow, where the congestion monitoring requirement corresponding to the QoS flow meets congestion monitoring requirements of all service flows to which the QoS flow is mapped, or, is the same as congestion monitoring requirements of all service data flows to which the QoS flow is mapped;
using a congestion status of the QoS flow to which the service data flow is mapped as a congestion status of the service data flow; and
sending the congestion monitoring requirement corresponding to the QoS flow.

According to a fifth aspect, an information processing method is provided, and applied to a fifth communication device. The method includes:
performing, by the fifth communication device, a fifth operation, where
the fifth operation includes at least one of the following:
determining a congestion monitoring requirement corresponding to a first QoS flow;
sending the congestion monitoring requirement corresponding to the first QoS flow;
determining a first requirement; and
sending the first requirement, where
the first requirement is an uplink congestion monitoring requirement corresponding to the first QoS flow, and/or, the first requirement is configured for requiring one or more of the following:
monitoring and/or reporting an uplink congestion status of a second object;
reporting the uplink congestion status of the second object through signaling corresponding to a third object and/or a data packet in the third object; and
using a congestion status of the second object as a congestion status of the third object; and
the second object includes one or more of the following:
the first QoS flow;
a first radio bearer;
a first logical channel; and
a first logical channel group; and
the third object includes one or more of the following:
the first QoS flow;
the first radio bearer;
the first logical channel; and
the first logical channel group.

According to a sixth aspect, an information processing method is provided, and applied to a sixth communication device. The method includes:
acquiring, by the sixth communication device, congestion status information of a first QoS flow; and
performing, by the sixth communication device, a sixth operation based on the congestion status information of the first QoS flow, where
the sixth operation includes at least one of the following:
determining a congestion status of a first service data flow; and
sending congestion status information of the first service data flow, where
the first service data flow is a service data flow to which the first QoS flow is mapped.

According to a seventh aspect, a communication device is provided, and is a first communication device. The apparatus includes:
a first acquisition module, configured to acquire a congestion monitoring requirement corresponding to a first QoS flow; and
a first execution module, configured to perform a first operation according to the congestion monitoring requirement corresponding to the first QoS flow, where
the first operation includes one or more of the following:
monitoring a congestion status of a first object;
using the congestion status of the first object as a congestion status of the first QoS flow;
reporting the congestion status of the first object or reporting the congestion status of the first QoS flow through signaling corresponding to the first QoS flow and/or a data packet in the first QoS flow;
mapping the first QoS flow to a first radio bearer; and
sending a first requirement, where
the first requirement is an uplink congestion monitoring requirement corresponding to the first QoS flow, and/or, the first requirement is configured for requiring one or more of the following:
monitoring and/or reporting an uplink congestion status of a second object;
reporting the uplink congestion status of the second object through signaling corresponding to a third object and/or a data packet in the third object; and
using a congestion status of the second object as a congestion status of the third object;
the first object includes one or more of the following:
the first QoS flow;
the first radio bearer;
a first logical channel;
a first logical channel group;
a first cell; and
the first communication device or a first radio access network RAN network element;
the second object includes one or more of the following:
the first QoS flow;
the first radio bearer;
the first logical channel; and
the first logical channel group; and
the third object includes one or more of the following:
the first QoS flow;
the first radio bearer;
the first logical channel; and
the first logical channel group.

According to an eighth aspect, a communication device is provided, and is a second communication device. The apparatus includes:
a second acquisition module, configured to acquire a first requirement; and
a second execution module, configured to perform a second operation according to the first requirement, where
the first requirement is an uplink congestion monitoring requirement corresponding to a first QoS flow, and/or, the first requirement is configured for requiring one or more of the following:
monitoring and/or reporting an uplink congestion status of a second object;
using a congestion status of the second object as a congestion status of the third object; and
reporting the uplink congestion status of the second object or reporting the congestion status of the third object through signaling corresponding to the third object and/or a data packet in the third object;
the second operation includes one or more of the following:
monitoring the uplink congestion status of the second object;
using the uplink congestion status of the second object as an uplink congestion status of a third object; and
reporting the uplink congestion status of the second object or reporting the uplink congestion status of the third object through the signaling corresponding to the third object and/or the data packet in the third object;
the second object includes one or more of the following:
the first QoS flow;
a first radio bearer;
a first logical channel; and
a first logical channel group; and
the third object includes one or more of the following:
the first QoS flow;
the first radio bearer;
the first logical channel; and
the first logical channel group.

According to a ninth aspect, a communication device is provided, and is a third communication device. The apparatus includes:
a third execution module, configured to perform a third operation, where
the third operation includes one or more of the following:
mapping each QoS flow having a congestion monitoring requirement to an independent fourth object;
determining, based on whether a QoS flow has a congestion monitoring requirement, to map the QoS flow to a same fourth object or different fourth objects;
mapping one or more QoS flows having a congestion monitoring requirement to a same fourth object;
mapping one or more QoS flows having a congestion monitoring requirement to a target fourth object, where a QoS flow having no congestion monitoring requirement does not exist in the target fourth object;
determining and/or saving a congestion monitoring requirement of a fourth object, where the congestion monitoring requirement of the fourth object meets congestion monitoring requirements of all QoS flows mapped to the fourth object, or, is the same as congestion monitoring requirements of all QoS flows mapped to the fourth object; and
using a congestion status of the fourth object to which the QoS flow is mapped as a congestion status of the QoS flow, where
the fourth object includes one or more of the following:
a radio bearer; and
a logical channel.

According to a tenth aspect, a communication device is provided, and is a fourth communication device. The apparatus includes:
a fourth execution module, configured to perform a fourth operation, where
the fourth operation includes one or more of the following:
mapping each service data flow having a congestion monitoring requirement to an independent QoS flow;
determining, based on whether a service data flow has a congestion monitoring requirement, to map the service data flow to a same QoS flow or different QoS flows;
mapping one or more service data flows having a congestion monitoring requirement to a same QoS flow;
mapping one or more service data flows having a congestion monitoring requirement to a target QoS flow, where a service data flow having no congestion monitoring requirement does not exist in the target QoS flow;
determining and/or saving a congestion monitoring requirement corresponding to the QoS flow, where the congestion monitoring requirement corresponding to the QoS flow meets congestion monitoring requirements of all service flows to which the QoS flow is mapped, or, is the same as congestion monitoring requirements of all service data flows to which the QoS flow is mapped;
using a congestion status of the QoS flow to which the service data flow is mapped as a congestion status of the service data flow; and
sending the congestion monitoring requirement corresponding to the QoS flow.

According to an eleventh aspect, a communication device is provided, and is a fifth communication device. The apparatus includes:
a fifth execution module, configured to perform a fifth operation, where
the fifth operation includes at least one of the following:
determining a congestion monitoring requirement corresponding to a first QoS flow;
sending the congestion monitoring requirement corresponding to the first QoS flow;
determining a first requirement; and
sending the first requirement, where
the first requirement is an uplink congestion monitoring requirement corresponding to the first QoS flow, and/or, the first requirement is configured for requiring one or more of the following:
monitoring and/or reporting an uplink congestion status of a second object;
reporting the uplink congestion status of the second object through signaling corresponding to a third object and/or a data packet in the third object; and
using a congestion status of the second object as a congestion status of the third object;
the second object includes one or more of the following:
the first QoS flow;
a first radio bearer;
a first logical channel; and
a first logical channel group; and
the third object includes one or more of the following:
the first QoS flow;
the first radio bearer;
the first logical channel; and
the first logical channel group.

According to a twelfth aspect, a communication device is provided, and is a sixth communication device. The apparatus includes:
a third acquisition module, configured to acquire congestion status information of a first QoS flow; and
a sixth execution module, configured to perform a sixth operation based on the congestion status information of the first QoS flow, where
the sixth operation includes at least one of the following:
determining a congestion status of a first service data flow; and
sending congestion status information of the first service data flow, where
the first service data flow is a service data flow to which the first QoS flow is mapped.

According to a thirteenth aspect, a communication device is provided, including a processor, a memory, and a computer program stored in the memory and executable on the processor. The computer program, when being executed by the processor, implements the steps of the information processing method according to the first aspect, or implements the steps of the information processing method according to the second aspect, or implements the steps of the information processing method according to the third aspect, or implements the steps of the information processing method according to the fourth aspect, or implements the steps of the information processing method according to the fifth aspect, or implements the steps of the information processing method according to the sixth aspect.

According to a fourteenth aspect, a communication system is provided, and includes: a first communication device, a second communication device, a third communication device, a fourth communication device, a fifth communication device, and a sixth communication device. The first communication device may be configured to perform the steps of the method according to the first aspect. The second communication device may be configured to perform the steps of the method according to the second aspect. The third communication device may be configured to perform the steps of the method according to the third aspect. The fourth communication device may be configured to perform the steps of the method according to the fourth aspect. The fifth communication device may be configured to perform the steps of the method according to the fifth aspect. The sixth communication device may be configured to perform the steps of the method according to the sixth aspect.

According to a fifteenth aspect, a computer storage medium is provided. The computer storage medium stores a program or instructions. The program or instructions, when being executed by a processor, implement the steps of the method according to the first aspect, or implement the steps of the method according to the second aspect, or implement the steps of the method according to the third aspect, or implement the steps of the method according to the fourth aspect, or implement the steps of the method according to the fifth aspect, or implement the steps of the method according to the sixth aspect.

According to a sixteenth aspect, a chip is provided. The chip includes a processor and a communication interface. The communication interface is coupled to the processor. The processor is configured to run a program or instructions to implement the steps of the method according to the first aspect, or implement the steps of the method according to the second aspect, or implement the steps of the method according to the third aspect, or implement the steps of the method according to the fourth aspect, or implement the steps of the method according to the fifth aspect, or implement the steps of the method according to the sixth aspect.

According to a seventeenth aspect, a computer program/program product is provided. The computer program/program product is stored in a storage medium. The computer program/program product, when being executed by at least one processor, implements the steps of the method according to the first aspect, or implements the steps of the method according to the second aspect, or implements the steps of the method according to the third aspect, or implements the steps of the method according to the fourth aspect, or implements the steps of the method according to the fifth aspect, or implements the steps of the method according to the sixth aspect.

In embodiments of this application, according to a first requirement corresponding to a QoS flow, a congestion status of the QoS flow or an object with a larger granularity than the QoS flow is monitored, and congestion status information is reported through signaling corresponding to the QoS flow or a data packet in the QoS flow. In one aspect, congestion monitoring and reporting with a granularity of a QoS flow are implemented, and in another aspect, congestion monitoring and reporting with a granularity of a service data flow are also implemented.

### BRIEF DESCRIPTION OF THE DRAWINGS

FIG. 1 is a schematic diagram of an architecture of a wireless communication system according to an embodiment of this application;
FIG. 2 is a schematic diagram of an architecture of another wireless communication system according to an embodiment of this application;
FIG. 3 shows a procedure of an information processing method according to an embodiment of this application;
FIG. 4 is a flowchart of another information processing method according to an embodiment of this application;
FIG. 5 is a flowchart of another first information processing method according to an embodiment of this application;
FIG. 6 is a flowchart of another first information processing method according to an embodiment of this application;
FIG. 7 is a flowchart of another information processing method according to an embodiment of this application;
FIG. 8 is a flowchart of another first information processing method according to an embodiment of this application;
FIG. 9a is a schematic flowchart of an application scenario according to an embodiment of this application;
FIG. 9b is a schematic flowchart of another application scenario according to an embodiment of this application;
FIG. 10 is a schematic structural diagram of a communication device according to an embodiment of the specification;
FIG. 11 is a schematic structural diagram of another communication device according to an embodiment of the specification;
FIG. 12 is a schematic structural diagram of another communication device according to an embodiment of the specification;
FIG. 13 is a schematic structural diagram of another communication device according to an embodiment of the specification;
FIG. 14 is a schematic structural diagram of another communication device according to an embodiment of the specification;
FIG. 15 is a schematic structural diagram of another communication device according to an embodiment of the specification;
FIG. 16 is a schematic structural diagram of another communication device according to an embodiment of the specification;
FIG. 17 is a structural diagram of a terminal according to an embodiment of the specification;
FIG. 18 is a structural diagram of a network side device according to an embodiment of this application; and
FIG. 19 is a structural diagram of another network side device according to an embodiment of this application.

### DETAILED DESCRIPTION

The following clearly and completely describes the technical solutions in the embodiments of the present application with reference to the accompanying drawings in the embodiments of the present application. Apparently, the described embodiments are only some embodiments of the present application rather than all the embodiments. All other embodiments obtained by a person of ordinary skill in the art based on embodiments of this application without creative efforts fall within the protection scope of this application.

The term "comprise" or any variation of such terms in in the description and claims of the present application is intended to cover a non-exclusive inclusion. For example, a process, method, system, product or device that includes a series of steps or units not only includes those steps or units specified expressly, but also includes other steps or units that are not specified expressly or are inherent to the process, method, product or device. In addition, the term "and/or" used in the description and claims represents at least one of associated objects. For example, A and/or B represents the following three cases: A exists separately, B exists separately, and both A and B exist.

In embodiments of this application, the term "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "exemplary" or "for example" is intended to present a related concept in a specific manner.

The technology described herein is not limited to a fifth-generation mobile communication (5th-generation, 5G) system and a future evolved communication system, and is not limited to an LTE/LTE-Advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems.

The terms "system" and "network" are often used interchangeably. The CDMA system may implement radio technologies such as CDMA2000 and Universal Terrestrial Radio Access (UTRA). The UTRA includes Wideband Code Division Multiple Access (CDMA) and another CDMA variant. The TDMA system may implement radio technologies such as Global System for Mobile Communications (GSM). The OFDMA system may implement radio technologies such as ultra mobile broadband (Ultra Mobile Broadband, UMB), evolved-UTRA (Evolution-UTRA, E-UTRA), IEEE 802.11 (Wi-Fi), IEEE 802.16 (WiMAX), IEEE 802.20, and Flash-OFDM. The UTRA and the E-UTRA are parts of a Universal Mobile Telecommunications System (UMTS). The LTE and more advanced LTE (for example, LTE-A) are new UMTS versions using E-UTRA. The UTRA, the E-UTRA, the UMTS, the LTE, the LTE-A, and the GSM are described in the documents from the Third Generation Partnership Project (3rd Generation Partnership Project, 3GPP). The CDMA2000 and the UMB are described in the documents from the "Third Generation Partnership Project 2" (3GPP2). The technology described herein may be applied to the systems and radio technologies mentioned above, and may also be applied to other systems and radio technologies.

To implement congestion monitoring and reporting per QoS flow, the following problems further need to be resolved.

Problem 1: A RAN cannot necessarily support congestion monitoring per QoS flow, but can support monitoring of a DRB/LCH, an LCH Group, a cell (for example, video resources of the cell are insufficient), and whether a congestion occurs in the entire RAN node.

In an idea for a solution, in a case that a congestion occurs in these objects with granularities larger than a granularity of a QoS flow, it is considered that a congestion occurs in a data flow in the QoS flow, and congestion status information is reported through signaling and/or user plane data with a granularity of a QoS flow, for example, (1). through signaling of a QoS flow; (2). congestion reporting through a first protocol layer (for example, a general packet radio service tunnel protocol-uplink (General packet radio service Tunnel Protocol-Uplink, GTP-U), a network layer (an IP layer) of an N3 interface, and an explicit congestion notification (Explicit Congestion Notification, ECN) marking of an IP layer) of a data packet in a QoS flow; and (3). an ECN.

Problem 2: In a case that a congestion occurs in a radio channel, congestions do not necessarily occur in all of a plurality of QoS flows mapped to the radio information. For example, a data amount of a QoS flow 1 is very large, and a data amount of a QoS flow 2 is very small. It appears that a congestion occurs in the QoS flow 1, and it appears that a congestion does not occur in the QoS flow 2.

An idea for a solution is to allocate an independent DRB to each QoS flow that requires congestion reporting.

Problem 3: It is possible that only UE can learn uplink per QoS flow/per DRB congestion, because only data packets are queued in a PDCP layer or a logical channel of a DBR on a UE side. Buffer Data Status reported by the UE has a granularity of an LCH logical channel group. The RAN cannot learn a queue status per LCH channel.

Manner 1: The RAN does not support uplink congestion monitoring. Considering to avoid affecting the UE, the RAN is indicated to perform downlink congestion control.

Manner 2: The RAN does not support monitoring of an uplink congestion at an air interface (Uu), and only supports monitoring of an uplink congestion at the N3 interface. In other words, only a congestion status of uplink data that has already reached the RAN is queued at the RAN to wait to be sent to the N3 interface is considered. If a congestion that occurs in a case that the RAN sends data to a UPF, the congestion is reported.

Manner 3: The RAN or a CN requires monitoring and reporting of uplink congestion from the UE, and sends congestion information reported by the UE to the UPF through a GTP-U header. Alternatively, the UE is required to directly add congestion markings corresponding to ECN/low latency low loss scalable throughput (Low Latency Low Loss Scalable Throughput, L4S) technology.

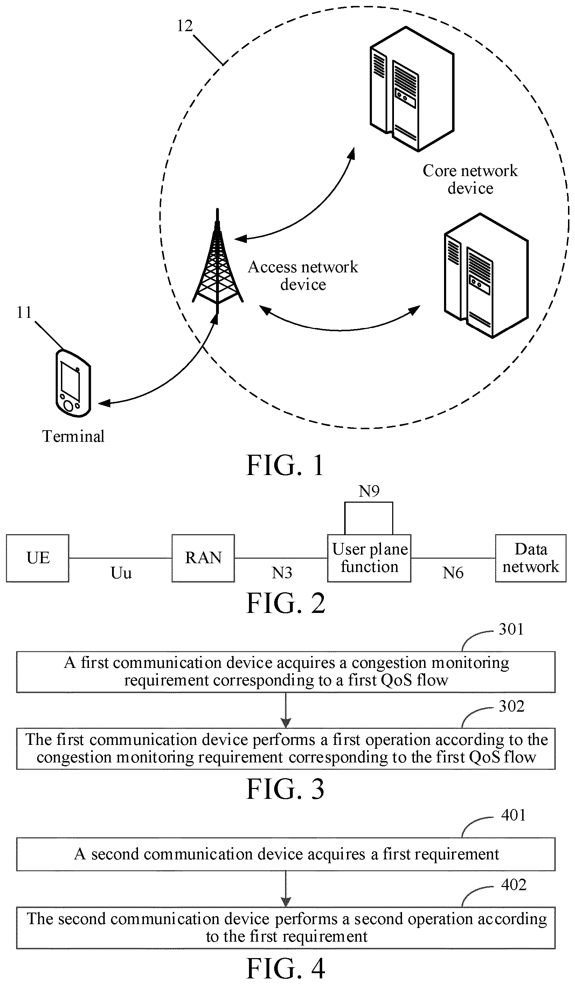

FIG. 1 is a schematic diagram of an architecture of a wireless communication system according to an embodiment of this application. The wireless communication system includes a terminal 11 and a network side device 12. The terminal 11 may be a terminal-side device, for example, a mobile phone, a tablet personal computer (Tablet Personal Computer), a laptop computer (Laptop Computer) or referred to as a notebook computer, a personal digital assistant (Personal Digital Assistant, PDA), a handheld computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart home (home devices such as a refrigerator, a television, a washing machine, furniture, and the like with wireless communication functions), a video game console, a personal computer (personal computer, PC), or such as an automated teller machine, a self-service machine, or the like. The wearable device includes a smart watch, a smart band, smart earphones, smart glasses, smart jewelry (a smart bracelet, a smart hand bangle, a smart ring, a smart necklace, a smart ankle bangle, a smart anklet, or the like), a smart wristband, smart clothing, and the like. It needs to be noted that, in embodiments of this application, a specific type of the terminal 11 is not limited. The network side device 12 may include an access network device or a core network device. The access network device may also be referred to as a radio access network device, a radio access network (Radio Access Network, RAN), a radio access network function or a radio access network unit. The access network device may include a base station, a wireless local area network (Wireless Local Area Network, WLAN) access point, a Wireless Fidelity (Wireless Fidelity, Wi-Fi) node, and the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another appropriate term in the field. Provided that the same technical effects are achieved, the base station is not limited to a specific technical term. It needs to be noted that, in embodiments of this application, only a base station in an NR system is used as an example for description, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It needs to be noted that, in embodiments of this application, only a core network device in an NR system is used as an example for description, and a specific type of the core network device is not limited.

It needs to be noted that the wireless communication system shown in FIG. 1 needs to include two core network devices, one of which is configured to transmit control plane data, and the other of which is configured to transmit user plane data.

FIG. 2 is a schematic diagram of an architecture of another wireless communication system according to an embodiment of this application. It needs to be noted that in embodiments of this application, congestions may include an uplink congestion and a downlink congestion. The downlink congestion may include a data congestion that occurs when a RAN sends data to user equipment (User Equipment, UE). The uplink congestion may include a data congestion that occurs when the UE sends data to the RAN and a data congestion that occurs when data that has reached the RAN continues to be sent to a CN. Specifically, as shown in FIG. 2, the RAN and the UE may perform data transmission through a Uu interface. The RAN and a user plane function (UPF) of the CN may perform data transmission through an N3 interface, specifically, transmission of user plane data through the N3 interface with the UPF in a core network. An interface between the UPF (for example, a gateway) and a data network is an N6 interface. An interface between a UPF and a UPF is N9.

Optionally, in embodiments of this application, the expression "acquiring" may be understood as obtaining from a configuration, receiving, receiving after a request, acquiring through self-learning, acquiring through inference based on unreceived information, or obtaining through processing based on received information, which may be specifically determined according to an actual requirement, and is not limited in embodiments of this application. For example, if information indicating a capability sent by a device is not received, it may be inferred that the device does not support the capability.

Optionally, "sending" may include broadcasting, broadcasting in a system message, or returning in response to a request.

In an optional embodiment of this application, a communication device may include at least one of the following: a communication network element and a terminal.

In an embodiment of this application, the communication network element may include at least one of the following: a core network element and a radio access network element.

In embodiments of this application, the core network element (CN network element) may include, but is not limited to, at least one of the following: a core network device, a core network node, a core network function, a core network element, a mobility management entity (Mobility Management Entity, MME), an access management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (PCF), a policy and charging rules function element (Policy and Charging Rules Function, PCRF), a serving GPRS support node (Serving GPRS Support Node, SGSN), a gateway GPRS support node (Gateway GPRS Support Node, GGSN), and an application function (Application Funcation).

In embodiments of this application, the RAN network element may include, but is not limited to, at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved Node B (evolved Node B, eNB), a 5G gNodeB (gNB), a radio network controller (Radio Network Controller, RNC), a Node B (NodeB), a non-3GPP interworking function (Non-3GPP Inter Working Function, N3IWF), an access controller (Access Controller, AC) node, an access point (Access Point, AP) device, or a wireless local area network (Wireless Local Area Networks, WLAN) node, and an N3IWF.

The base station may be a base transceiver station (BTS, Base Transceiver Station) in a GSM or CDMA, or may be a nodeB (NodeB) in WCDMA, or may be an evolved node B (eNB or e-NodeB, evolutional Node B) in LTE, or a 5G gNodeB (gNB). This is not limited in embodiments of this application.

In an optional embodiment of this application, the UE may include one of the following: a terminal device, a terminal device and a card, and a card.

In an optional embodiment of this application, the card may include one of the following: a SIM card, a USIM card, and an eSIM.

In an optional embodiment of this application, the terminal may include a relay that supports terminal functions and/or a terminal that supports relay functions. The terminal may also be referred to as a terminal device or a user terminal (User Equipment, UE). The terminal may be a terminal side device, for example, a mobile phone, a tablet personal computer (Tablet Personal Computer), a laptop computer (Laptop Computer), a personal digital assistant (Personal Digital Assistant, PDA), a mobile internet device (Mobile Internet Device, MID), a wearable device (Wearable Device), or an in-vehicle device. It needs to be noted that the specific type of the terminal is not limited in embodiments of this application.

The terms in the specific implementation of this application are described and explained below.

In an optional embodiment of this application, congestion monitoring may include at least one of the following: congestion status monitoring, congestion status measurement, and/or congestion status reporting. The congestion status includes at least one of the following: a congestion starts or a congestion occurs, a congestion ends or no congestion occurs, a congestion de-escalates, and a congestion escalates.

In an optional embodiment of this application, when a congestion occurs in an N^{th} object, a congestion occurs in data transfer in the N^{th} object.

In an optional embodiment of this application, congestion status information of the N^{th} object is congestion status information of the data transfer in the N^{th} object.

In an optional embodiment of this application, congestion status information in the N^{th} object is congestion status information of the data transfer in the N^{th} object.

In an optional embodiment of this application, that a congestion occurs in the N^{th} object (the N^{th} object includes one of the following: a first object, a second object, a third object, a fourth object, a QoS flow, a service data flow, a first QoS flow, a first DRB, a first cell, and a first RAN network element) includes one of the following: QoS of the N^{th} object cannot be met, a data sending rate of the N^{th} object is less than a data receiving rate of the N^{th} object, time domain resources are insufficient, a buffer overflows, and a queue overflows.

In an implementation, time domain resources being insufficient is, for example, time domain resources of a first cell are insufficient for transferring all received data or buffered data.

In an implementation, a congestion occurring in a first DRB includes one of the following: QoS of the first DRB cannot be met, and a data sending rate of the first DRB is less than the data receiving rate of the N^{th} object. That QoS cannot be met is, for example: a rate cannot be ensured, a packet loss rate cannot be ensured, a packet loss ratio cannot be ensured, and a PER cannot be ensured.

In an implementation, the data sending rate of the N^{th} object being less than the data receiving rate of the N^{th} object includes: a sending rate of data of the N^{th} object sent to a first interface is less than a sending rate of data of the N^{th} object received from a second interface. The first interface or the second interface includes one of the following: a Uu interface, an N9 or N3 interface, and an N6 interface.

When the first interface is a Uu interface, the second interface may be an N3 interface.

When the first interface is an N3 interface, the second interface may be a Uu interface.

When the first interface is an N6 interface, the second interface may be an N3 or N9 interface.

When the first interface is an N3 or N9 interface, the second interface may be an N6 interface.

In an optional embodiment of this application, the QoS includes at least one of the following: a guaranteed bit rate (for example, a guaranteed flow bit rate (Guaranteed Flow Bit Rate, GFBR)), a minimum transmission rate (for example, a minimum flow bit rate), a packet error rate (Packet Error Rate, PER), a packet loss rate, a transmission delay budget, and a buffering delay budget.

That the QoS cannot be met includes at least one of the following: the guaranteed flow bit rate cannot be ensured (for example, an actual transmission rate is lower than the guaranteed flow bit rate), the minimum transmission rate cannot be met (for example, an actual minimum transmission rate is less than the minimum transmission rate), the packet error rate cannot be met (for example, an actual packet error rate is greater than a packet error rate in QoS), the packet loss rate cannot be met (for example, an actual packet loss rate is greater than a packet loss rate in QoS), the transmission delay budget cannot be met (an actual transmission delay overhead is greater than the transmission delay budget), and the buffering delay budget cannot be met (an actual buffering delay overhead of data is greater than the buffering delay budget).

In an optional embodiment of this application, a data packet includes a protocol data unit (Protocol Data Unit, PDU)/packet data unit.

In an optional embodiment of this application, all described ECNs represent ECNs and/or ECN markings for L4S.

In an optional embodiment of this application, the QoS flow having a congestion monitoring requirement is that the congestion monitoring requirement corresponding to the QoS flow is acquired. If the congestion monitoring requirement corresponding to the QoS flow is not acquired, it may be considered that the QoS flow does not have a congestion monitoring requirement.

In an optional embodiment of this application, a tunnel includes at least one of the following: a session (session) (for example, a PDU session, or a session between a RAN and a CN), a QoS flow, a QoS subflow, an evolved packet system (Evolved Packet System, EPS) bearer, a PDP context, a DRB, a signaling radio bearer (Signalling Radio Bearer, SRB), an IPsec association, and a GPRS Tunneling Protocol (GPRS Tunnelling Protocol, GTP) tunnel (tunnel). The tunnel may be instantiated as a tunnel of any foregoing type.

In an optional embodiment of this application, a reporting event is that when the event occurs, the event is reported. The event includes at least one of the following: a congestion occurs, the congestion ends, the congestion escalates, and the congestion de-escalates.

In an embodiment of this application, the NG interface may also be referred to as an S1 interface or an N2 interface, the name of which is not limited.

In an embodiment of this application, a wireless communication network may be at least one of the following: a public network, and a non-public network. Alternatively, the first network may be a non-public network.

In an embodiment of this application, the non-public network is short for a non-public network. The non-public network may be referred to as one of the following: a non-public communication network. The non-public network may include at least one of the following deployment manners: a physical non-public network, a virtual non-public network, a non-public network implemented on a public network. In an implementation, the public network is a closed access group (Closed Access Group, CAG). One CAG may be formed by one group of terminals.

In an embodiment of this application, the non-public network may include or may be referred to as a private network. The private network may be referred to as one of the following: a private communication network, a private network, a local area network (LAN), a private virtual network (PVN), an isolated communication network, a dedicated communication network, or another name. It needs to be noted that a naming manner is not specifically limited in embodiments of this application.

In an embodiment of this application, the public network is short for a non-public network. The public network may be referred to as one of the following: a public communication network or another name. It needs to be noted that a naming manner is not specifically limited in embodiments of this application.

In an embodiment of this application, a size of the data packet may be referred to as a length of the data packet.

In an embodiment of this application, the data packet may be referred to as a data frame.

In an optional embodiment of this application, a communication device may include at least one of the following: a communication network element and a terminal.

In an embodiment of this application, the communication network element may include at least one of the following: a core network element and a radio access network element.

An information processing method provided in embodiments of this application is described below.

Referring to FIG. 3, embodiments of this application provide an information processing method, applied to a first communication device. The first communication device includes, but is not limited to, an access network element (for example, a RAN) or a terminal device (for example, UE). The method includes at least one of the following.

Step 301: The first communication device acquires a congestion monitoring requirement corresponding to a first QoS flow.

Step 302: The first communication device performs a first operation according to the congestion monitoring requirement corresponding to the first QoS flow.

The first operation includes one or more of the following:
monitoring a congestion status of a first object;
using the congestion status of the first object as a congestion status of the first QoS flow;
reporting the congestion status of the first object or reporting the congestion status of the first QoS flow through signaling corresponding to the first QoS flow and/or a data packet in the first QoS flow;
mapping the first QoS flow to a first radio bearer; and
sending a first requirement, where
the first requirement is an uplink congestion monitoring requirement corresponding to the first QoS flow, and/or, the first requirement is configured for requiring one or more of the following:
monitoring and/or reporting an uplink congestion status of a second object;
reporting the uplink congestion status of the second object through signaling corresponding to a third object and/or a data packet in the third object; and
using a congestion status of the second object as a congestion status of the third object; and
the first object includes one or more of the following:
the first QoS flow;
the first radio bearer;
a first logical channel;
a first logical channel group;
a first cell; and
the first communication device or a first radio access network RAN network element;
the second object includes one or more of the following:
the first QoS flow;
the first radio bearer;
the first logical channel; and
the first logical channel group; and
the third object includes one or more of the following:
the first QoS flow;
the first radio bearer;
the first logical channel; and
the first logical channel group.

In an implementation, the first communication device is the first RAN network element.

In another implementation, the first communication device is a terminal.

Optionally, the first communication device acquires the congestion monitoring requirement corresponding to the first QoS flow from a first target end. The first target end includes at least one of the following: a fourth communication device, a fifth communication device, an AMF, an SMF, and a PCF.

Optionally, the first communication device sends congestion status information of the first object to the first target end.

In an implementation, the congestion monitoring requirement corresponding to the first QoS flow does not include the uplink congestion monitoring requirement corresponding to the first QoS flow. The congestion monitoring requirement corresponding to the first QoS flow may be only configured for monitoring a downlink congestion status of the first QoS flow or the first object.

Optionally, the first communication device sends the first requirement to a second communication device.

In an implementation, the congestion status of the first object includes an uplink and/or downlink congestion status of the first object.

In an implementation, the first object includes the second object. The first object includes the third object. The second object and the third object may be the same, and for example, are both the first radio bearer. The second object and the third object may be different. For example, the second object is the first radio bearer, and the third object is the first QoS flow.

A granularity of the second object is greater than or equal to a granularity of the third object.

In a case that the third object is the first QoS flow, the second object includes one or more of the following: the first QoS flow, the first radio bearer, the first logical channel, and the first logical channel group.

For example, in a case that the third object is the first radio bearer, the second object includes one or more of the following: the first radio bearer, the first logical channel, and the first logical channel group.

In a case that the third object is the first logical channel group, the second object includes one or more of the following: the first logical channel group.

The using a congestion status of the second object as a congestion status of the third object includes: using congestion status information of the second object as congestion status information of the third object.

In an implementation, the third object is the first QoS flow, and the congestion status of the second object is reported through signaling corresponding to the first QoS flow or a data packet in the first QoS flow.

In another implementation, the third object is the first radio bearer, and the congestion status of the second object is reported through signaling corresponding to the first radio bearer or a data packet in the first radio bearer.

The congestion monitoring requirement corresponding to the first QoS flow may be included in an information element of the first QoS flow.

The first QoS flow may be one or more QoS flows.

In an implementation, the congestion monitoring requirement includes one of the following: a congestion monitoring requirement configured for an ECN and/or L4S congestion marking, or a congestion monitoring requirement configured for another congestion marking different from the ECN and/or L4S congestion marking.

In an implementation, information configured for indicating that uplink and/or downlink congestion monitoring (for example, monitoring) requires to be performed may be a specific 5QI value.

In an implementation, the congestion monitoring requirement corresponding to the first QoS flow is configured for requiring one or more of the following:
monitoring and/or reporting a congestion status of the first QoS flow;
monitoring and/or reporting the congestion status of the first object; and
reporting the congestion status of the first object or reporting the congestion status of the first QoS flow through signaling corresponding to the first QoS flow and/or a data packet in the first QoS flow;
   and/or
a parameter in the congestion monitoring requirement corresponding to the first QoS flow includes one or more of the following:
information configured for indicating that uplink and/or downlink congestion monitoring requires to be performed, a reporting event, a reporting frequency, and information configured for describing a congestion level.

It needs to be noted that the reporting event is, for example, one of the following: a congestion starts or a congestion occurs, the congestion ends, the congestion reaches an N^{th} congestion level, a congestion level escalates, and a congestion level decreases. One or more congestion levels may be provided. N may be one or more positive integers.

The monitoring and/or reporting a congestion status of the first QoS flow includes: monitoring and/or reporting an uplink and/or downlink congestion status of the first QoS flow; and
the monitoring and/or reporting the congestion status of the first object includes: monitoring and/or reporting the uplink and/or downlink congestion status of the first object.

The congestion status information of the first object includes uplink and/or downlink congestion status information of the first object.

In an implementation, the uplink congestion monitoring requirement corresponding to the first QoS flow is configured for requiring one or more of the following:
monitoring and/or reporting an uplink congestion status of the first QoS flow;
monitoring and/or reporting an uplink congestion status of a second object;
using a congestion status of the second object as a congestion status of the third object; and
reporting the congestion status of the second object or the congestion status of the third object through the signaling corresponding to the third object and/or the data packet in the third object;
   and/or
a parameter in the uplink congestion monitoring requirement corresponding to the first QoS flow or the first requirement includes one or more of the following:
information configured for indicating that uplink congestion monitoring requires to be performed, a reporting event, a reporting frequency, and information configured for describing a congestion level.

It needs to be noted that the reporting event is, for example, one of the following: a congestion starts or a congestion occurs, the congestion ends, the congestion reaches an N^{th} congestion level, a congestion level increases, and a congestion level decreases. One or more congestion levels may be provided. N may be one or more positive integers.

The congestion status information of the second object includes uplink congestion status information of the second object.

In an implementation, the using the congestion status of the first object as a congestion status of the first QoS flow includes at least one of the following:
determining, in a case that a congestion occurs in the first object, that a congestion occurs in the first QoS flow;
determining, in a case that the congestion in the first object ends, that the congestion in the first QoS flow ends;
determining, in a case that the congestion in the first object escalates, that the congestion in the first QoS flow escalates;
determining, in a case that the congestion in the first object de-escalates, that the congestion in the first QoS flow de-escalates; and
using congestion status information of the first object as congestion status information of the first QoS flow;
   and/or
the using a congestion status of the second object as a congestion status of the third object includes at least one of the following:
determining, in a case that a congestion occurs in the second object, that a congestion occurs in the third object;
determining, in a case that the congestion in the second object ends, that the congestion in the third object ends;
determining, in a case that the congestion in the second object escalates, that the congestion in the third object escalates;
determining, in a case that the congestion in the second object de-escalates, that the congestion in the third object de-escalates; and
using congestion status information of the second object as congestion status information of the third object.

In an implementation, the sending a first requirement includes:
sending the first requirement in a case that a first condition is met, where
the first condition includes at least one of the following:
the congestion monitoring requirement corresponding to the first QoS flow includes the uplink congestion monitoring requirement corresponding to the first QoS flow; and
the first object includes at least one of the following: the first QoS flow, the first radio bearer, the first logical channel, and the first logical channel group.

It is not difficult to understand that the uplink congestion monitoring requirement may need to be performed by the second communication device.

In an implementation, the reporting the congestion status of the first object or reporting the congestion status of the first QoS flow through signaling corresponding to the first QoS flow includes:
sending uplink and/or downlink congestion status information of the first object or uplink and/or downlink congestion status information of the first QoS flow through an information element and/or a first interface message corresponding to the first QoS flow;
   or
the reporting the congestion status of the first object or reporting the congestion status of the first QoS flow through the data packet in the first QoS flow includes at least one of the following:
making a packet header of the data packet in the first QoS flow carry congestion status information of the first object or congestion status information of the first QoS flow; and
sending the data packet in the first QoS flow to a second interface,
where
a first interface is a control plane interface between a core network and an access network; and
a second interface is a user plane interface between the core network and the access network.

In an implementation, the packet header of the data packet includes at least one of the following: a GTP-U header, and an IP header.

That the packet header of the data packet carries the congestion status information of the first object is, for example, one of the following: the GTP-U header carries the congestion status information, and the IP header carries an ECN marking (for example, CE in the ECN marking, and a congestion occurrence marking).

In an implementation, the information element corresponding to the first QoS flow is an information element corresponding to the first QoS flow in the first interface message.

In an implementation, the making a packet header of the data packet in the first QoS flow carry congestion status information of the first object or congestion status information of the first QoS flow includes at least one of the following:
making a packet header of an uplink data packet in the first QoS flow carry congestion status information, where the congestion status information is information describing an uplink congestion status of the first object or an uplink congestion status of the first QoS flow;
making a packet header of a downlink data packet in the first QoS flow carry congestion status information, where the congestion status information is information describing a downlink congestion status of the first object or a downlink congestion status of the first QoS flow;
making the packet header of the uplink data packet in the first QoS flow carry uplink congestion status information, where the uplink congestion status information is information describing the uplink congestion status of the first object or the uplink congestion status of the first QoS flow; and
making the packet header of the uplink data packet in the first QoS flow carry downlink congestion status information, where the downlink congestion status information is information describing the downlink congestion status of the first object or the downlink congestion status of the first QoS flow.

In an implementation, the downlink congestion status information and/or the uplink congestion status information does not need to be reflected by information with a direction. For example, the congestion status information carried in the uplink data packet may represent the uplink congestion status information. For example, the congestion status information carried in the downlink data packet may represent the downlink congestion status information.

In another implementation, the downlink congestion status information and/or the uplink congestion status information needs to be reflected by a direction. For example, the uplink congestion status information carried in the uplink data packet may represent the uplink congestion status information. For example, the downlink congestion status information carried in the uplink data packet may represent the downlink congestion status information. Alternatively, the uplink congestion status information carried in the information element or message may represent the uplink congestion status information. The downlink congestion status information carried in the information element or message may represent the downlink congestion status information.

In an implementation, the first radio bearer includes: a radio bearer to which the first QoS flow is mapped;
and/or
the first radio bearer and the first QoS flow have a one-to-one mapping, or QoS flows mapped to the first radio bearer all have congestion monitoring requirements;
   and/or
the first logical channel includes: a logical channel corresponding to the first radio bearer, and/or, a logical channel to which the first QoS flow is mapped;
   and/or
the first logical channel group includes: a logical channel group to which the first logical channel belongs;
   and/or
the first cell includes: a cell carrying data of the first QoS flow;
   and/or
the first RAN network element includes: a RAN network element that allocates a radio resource to the first QoS flow.

In an implementation, for example, the first radio bearer is a first DRB, and the first DRB may include one or more DRBs. Similarly, the first logical channel may include one or more logical channels. For example, in extended reality (Extended Reality, XR), one QoS flow may correspond to a plurality of DRBs or a plurality of logical channels.

In an implementation, the monitoring a congestion status of a first object includes one or more of the following:
monitoring downlink congestion statuses of one or more of the first QoS flow, the first radio bearer, the first logical channel, and the first logical channel group;
monitoring uplink congestion statuses of one or more of the first QoS flow, the first radio bearer, the first logical channel, and the first logical channel group, or requiring the second communication device to monitor the uplink congestion statuses of one or more of the first QoS flow, the first radio bearer, the first logical channel, and the first logical channel group; and
monitoring uplink and/or downlink congestion statuses in the first cell and/or the first communication device.

In an implementation, after the sending a first requirement, the method further includes:
acquiring, by the first communication device, related information of the uplink congestion status of the second object.

In an implementation, the first object includes the second object.

The related information of the uplink congestion status includes at least one of the following: the uplink congestion status information, and an average queuing duration of the second object.

After acquiring the uplink congestion status information of the second object, the first communication device reports the uplink congestion status information of the second object as one piece of the congestion status information of the first object.

In an implementation, the congestion status includes one or more of the following:
a congestion starts or a congestion occurs;
a congestion ends or no congestion occurs; and
a congestion level;
   and/or
an uplink congestion status includes one or more of the following:
an uplink congestion starts or an uplink congestion occurs;
an uplink congestion ends or no uplink congestion occurs; and
a congestion level or an uplink congestion level;
   and/or
a downlink congestion status includes one or more of the following:
a downlink congestion starts or a downlink congestion occurs;
a downlink congestion ends or no downlink congestion occurs; and
a congestion level or an uplink congestion level;
   and/or
the congestion status information, downlink congestion status information, and/or uplink congestion status information includes one or more of the following:
first information, configured for indicating that a congestion starts or a congestion occurs;
second information, configured for indicating that a congestion ends or no congestion occurs; and
third information, configured for indicating a congestion level;
   and/or
the uplink congestion status information includes one or more of the following:
fourth information, configured for indicating that an uplink congestion starts or an uplink congestion occurs;
fifth information, configured for indicating that an uplink congestion ends or no uplink congestion occurs; and
sixth information, configured for indicating a congestion level or an uplink congestion level;
   and/or
the downlink congestion status information includes one or more of the following:
seventh information, configured for indicating that a downlink congestion starts or a downlink congestion occurs;
eighth information, configured for indicating that a downlink congestion ends or no downlink congestion occurs; and
ninth information, configured for indicating a congestion level or a downlink congestion level.

In an implementation, the downlink congestion status information and/or the uplink congestion status information does not need to be reflected by information with a direction. For example, the congestion status information carried in the uplink data packet may represent the uplink congestion status information. For example, the congestion status information carried in the downlink data packet may represent the downlink congestion status information.

In another implementation, the downlink congestion status information and/or the uplink congestion status information needs to be reflected by a direction. For example, the uplink congestion status information carried in the uplink data packet may represent the uplink congestion status information. For example, the downlink congestion status information carried in the uplink data packet may represent the downlink congestion status information. Alternatively, the uplink congestion status information carried in the information element or message may represent the uplink congestion status information. The downlink congestion status information carried in the information element or message may represent the downlink congestion status information.

In an implementation, the downlink congestion level and/or a downlink congestion state level does not need to be reflected by information with a direction. For example, through information of the uplink congestion occurring together with the congestion level, it may be learned that the congestion level is the uplink congestion level.

In an implementation, the reporting the congestion status of the first object or reporting the congestion status of the first QoS flow includes one or more of the following:
sending first congestion status information in a case that a congestion occurs in the first object;
sending second congestion status information in a case that the congestion in the first object ends;
sending third congestion status information in a case that a congestion level of the first object changes;
sending the first congestion status information or fourth congestion status information in a case that an uplink congestion occurs in the first object;
sending the second congestion status information or fifth congestion status information in a case that the uplink congestion in the first object ends;
sending the third congestion status information or sixth congestion status information in a case that an uplink congestion level of the first object changes;
sending the first congestion status information or seventh congestion status information in a case that the downlink congestion occurs in the first object;
sending the second congestion status information or reporting eighth congestion status information in a case that the downlink congestion in the first object ends; and
sending the third congestion status information or ninth congestion status information in a case that a downlink congestion level of the first object changes;
where
the first congestion status information includes first information and/or third information;
the second congestion status information includes second information;
the third congestion status information includes the third information;
the fourth congestion status information includes fourth information and/or sixth information;
the fifth congestion status information includes fifth information; and
the sixth congestion status information includes the sixth information;
the seventh congestion status information includes seventh information and/or ninth information;
the eighth congestion status information includes eighth information; and
the ninth congestion status information includes the ninth information.

In an implementation, in a case that a congestion occurs in an object (for example, another first object other than the first QoS flow) with a larger granularity than the first QoS flow, it may be considered that a congestion occurs in the first QoS flow, and the first congestion status information may be reported through signaling and/or user plane data with the granularity of the first QoS flow, for example, reported (1) through the signaling corresponding to the first QoS flow, or (2) through a packet header (for example, a GTP-U, an IP layer of an N3 interface, and an ECN marking of the IP layer) of the data packet in the first QoS flow, where the first congestion status information includes information configured for indicating that a congestion starts.

In another implementation, in a case that a congestion in an object (for example, another first object other than the first QoS flow) with a larger granularity than the first QoS flow ends, it is considered that the congestion in the first QoS flow ends, the second congestion status information is reported through signaling and/or user plane data with the granularity of the first QoS flow, and the second congestion status information includes information configured for indicating that the congestion ends.

In another implementation, in a case that a congestion level of an object (for example, another first object other than the first QoS flow) with a larger granularity than a granularity of a QoS flow changes (the level increases or decreases), it is considered that a congestion level of a data flow in the QoS flow changes, the third congestion status information is reported through signaling and/or user plane data with the granularity of the first QoS flow, and the third congestion status information includes information configured for indicating the congestion level.

In an implementation, that a congestion starts or a congestion occurs includes at least one of the following: QoS cannot be met, a data sending rate is less than a data receiving rate of an N^{th} object, time domain resources are insufficient, a buffer overflows, and a queue overflows;
and/or
that a congestion starts or a congestion occurs in the first QoS flow includes at least one of the following: QoS of the first QoS flow cannot be met, a data sending rate of the first QoS flow is less than a data receiving rate of the first QoS flow, time domain resources of the first QoS flow are insufficient, a buffer for the first QoS flow overflows, and a queue of the first QoS flow overflows;
   and/or
that a congestion starts or a congestion occurs in the N^{th} object includes at least one of the following: QoS of the N^{th} object cannot be met, a data sending rate of the N^{th} object is less than the data receiving rate of the N^{th} object, time domain resources of the N^{th} object are insufficient, a buffer for the N^{th} object overflows, and a queue of the N^{th} object overflows, where
the N^{th} object is any one of the following: the first object, the second object, and the third object.

In an implementation, the congestion status of the first object includes at least one of the following:
a congestion status of data in the first object at a Uu interface; and
a congestion status of the data in the first object at a third interface;
   and/or
a downlink congestion status of the first object includes at least one of the following:
a congestion status of data that is in the first object and that reaches the first communication device before being sent to the Uu interface;
an uplink congestion status of the first object includes at least one of the following:
a congestion status of the data that is in the first object and that reaches the first communication device before being sent to the third interface; and
a congestion status of data that is in the first object and that reaches a terminal before being sent to the Uu interface,
where
the Uu interface is an interface between the terminal and a radio access network; and
the third interface is interfaces between the terminal and the radio access network and between the radio access network and a core network.

Through embodiments of this application, the first communication device performs one or more following operations according to the first requirement corresponding to a QoS flow: monitoring a congestion status of the QoS flow or an object with a larger granularity than the QoS flow, reporting congestion status information through signaling corresponding to the QoS flow or a data packet in the QoS flow, mapping the QoS flow to an independent radio bearer, and sending a first requirement, thereby implementing congestion monitoring and reporting of the QoS flow.

Referring to FIG. 4, embodiments of this application provide an information processing method, applied to a second communication device. The second communication device includes, but is not limited to, a terminal device (for example, UE). The method includes:
Step 401: The second communication device acquires a first requirement.
Step 402: The second communication device performs a second operation according to the first requirement.

The first requirement is an uplink congestion monitoring requirement corresponding to a first QoS flow, and/or, the first requirement is configured for requiring one or more of the following:
monitoring and/or reporting an uplink congestion status of a second object;
using a congestion status of the second object as a congestion status of a third object; and
reporting the uplink congestion status of the second object or reporting the congestion status of the third object through signaling corresponding to the third object and/or a data packet in the third object, where
the second operation includes one or more of the following:
monitoring the uplink congestion status of the second object;
using the uplink congestion status of the second object as an uplink congestion status of the third object; and
reporting the uplink congestion status of the second object or reporting the uplink congestion status of the third object through the signaling corresponding to the third object and/or the data packet in the third object;
the second object includes one or more of the following:
the first QoS flow;
a first radio bearer;
a first logical channel; and
a first logical channel group; and
the third object includes one or more of the following:
the first QoS flow;
the first radio bearer;
the first logical channel; and
the first logical channel group.

In an implementation, congestion status information in this embodiment includes uplink congestion status information.

Optionally, the second communication device acquires the first requirement from a second target end. The second target end includes at least one of the following: a first communication device, a fourth communication device, a fifth communication device, an AMF, an SMF, and a PCF.

Optionally, the second communication device reports the uplink congestion status of the second object or the uplink congestion status of the third object to the second target end.

In an implementation, the second object and the third object may be the same, and for example, are both the first radio bearer. The second object and the third object may be different. For example, the second object is the first radio bearer, and the third object is the first QoS flow.

In an implementation, a granularity of the second object is greater than or equal to a granularity of the third object.

In a case that the third object is the first QoS flow, the second object includes one or more of the following: the first QoS flow, the first radio bearer, the first logical channel, and the first logical channel group.

For example, in a case that the third object is the first radio bearer, the second object includes one or more of the following: the first radio bearer, the first logical channel, and the first logical channel group.

In a case that the third object is the first logical channel group, the second object includes one or more of the following: the first logical channel group.

In an implementation, the third object is the first QoS flow, and the uplink congestion status of the second object is reported or the uplink congestion status of the third object is reported through signaling corresponding to the first QoS flow or a data packet in the first QoS flow.

In another implementation, the third object is the first radio bearer, and the uplink congestion status of the second object is reported or the uplink congestion status of the third object is reported through signaling corresponding to the first radio bearer or a data packet in the first radio bearer.

In an implementation, the using a congestion status of the second object as a congestion status of a third object includes at least one of the following:
determining, in a case that a congestion occurs in the second object, that a congestion occurs in the third object;
determining, in a case that the congestion in the second object ends, that the congestion in the third object ends;
determining, in a case that the congestion in the second object escalates, that the congestion in the third object escalates;
determining, in a case that the congestion in the second object de-escalates, that the congestion in the third object de-escalates; and
using congestion status information of the second object as congestion status information of the third object.
   and/or
the using the uplink congestion status of the second object as an uplink congestion status of the third object includes at least one of the following:
determining, in a case that an uplink congestion occurs in the second object, that an uplink congestion occurs in the third object;
determining, in a case that the uplink congestion in the second object ends, that the uplink congestion in the third object ends;
determining, in a case that the uplink congestion in the second object escalates, that the uplink congestion in the third object escalates;
determining, in a case that the uplink congestion in the second object de-escalates, that the uplink congestion in the third object de-escalates; and
using uplink congestion status information of the second object as uplink congestion status information of the third object.

In an implementation, the reporting the uplink congestion status of the second object or reporting the uplink congestion status of the third object through the signaling corresponding to the third object includes:
sending one of the following through an information element and/or a Uu interface message corresponding to the third object: congestion status information of the second object, congestion status information of the third object, uplink congestion status information of the second object, and uplink congestion status information of the third object;
   or
the reporting the uplink congestion status of the second object or reporting the uplink congestion status of the third object through the data packet in the third object includes at least one of the following:
making a packet header of an uplink data packet in the third object carry congestion status information;
making a packet header of the data packet in the third object carry uplink congestion status information; and
sending the data packet in the third object to a Uu interface, where
the congestion status information or the uplink congestion status information is information describing the uplink congestion status of the second object or the uplink congestion status of the third object; and
the Uu interface is an interface between a terminal and a radio access network.

In an implementation, the packet header of the data packet includes at least one of the following: a PDCP header, an RLC header, a MAC header, an IP header, a header (for example, a TCP header, an RTP header, or the like) of a protocol above an IP layer.

That the packet header of the data packet carries congestion status information of a first object is, for example, one of the following: a PDCP header, an RLC header, or a MAC header carries congestion status information (for example, a congestion starts, the congestion ends, and/or an uplink congestion level), and the IP header carries an ECN marking (for example, CE in the ECN marking, and a congestion occurrence marking). In an implementation, the foregoing congestion status information includes uplink congestion status information.

In an implementation, the information element corresponding to the third object is an information element corresponding to the third object in the Uu interface message. The Uu interface message is, for example, an RRC message.

In an implementation, the first radio bearer includes: a radio bearer to which the first QoS flow is mapped;
and/or
the first radio bearer and the first QoS flow have a one-to-one mapping, or QoS flows mapped to the first radio bearer all have congestion monitoring requirements;
the first logical channel includes: a logical channel corresponding to the first radio bearer, and/or, a logical channel to which the first QoS flow is mapped;
   and/or
the first logical channel group includes: a logical channel group to which the first logical channel belongs.

In an implementation, a first DRB may include one or more DRBs. Similarly, the first logical channel may include one or more logical channels. For example, in extended reality (Extended Reality, XR), one QoS flow may correspond to a plurality of DRBs or a plurality of logical channels.

In an implementation, an uplink congestion status includes one or more of the following:
an uplink congestion starts or an uplink congestion occurs;
an uplink congestion ends or no uplink congestion occurs; and
a congestion level or an uplink congestion level;
the congestion status information and/or the uplink congestion status information includes one or more of the following:
first information, configured for indicating that a congestion starts;
second information, configured for indicating that a congestion ends; and
third information, configured for indicating a congestion level;
   and/or
the uplink congestion status information includes one or more of the following:
fourth information, configured for indicating that an uplink congestion starts or an uplink congestion occurs;
fifth information, configured for indicating that an uplink congestion ends or no uplink congestion occurs; and
sixth information, configured for indicating a congestion level or an uplink congestion level.

In an implementation, the uplink congestion status information does not need to be reflected by information with a direction. For example, the congestion status information carried in the uplink data packet may represent the uplink congestion status information.

In another implementation, the uplink congestion status information needs to be reflected by a direction. For example, the uplink congestion status information carried in the information element or message may represent the uplink congestion status information.

In an implementation, the reporting the uplink congestion status of the second object or reporting the uplink congestion status of the third object through the data packet in the third object includes one or more of the following:
sending first congestion status information in a case that a congestion occurs in the second object;
sending second congestion status information in a case that the congestion in the second object ends;
sending third congestion status information in a case that a congestion level of the second object changes;
sending the first congestion status information or fourth congestion status information in a case that an uplink congestion occurs in the second object;
sending the second congestion status information or fifth congestion status information in a case that the uplink congestion in the second object ends; and
reporting the third congestion status information or sixth congestion status information in a case that an uplink congestion level of the second object changes;
where
the first congestion status information includes first information and/or third information;
the second congestion status information includes second information;
the third congestion status information includes the third information;
the fourth congestion status information includes fourth information and/or sixth information;
the fifth congestion status information includes fifth information; and
the sixth congestion status information includes the sixth information.

In an implementation, in a case that a congestion occurs in an object (for example, another second object other than the first QoS flow) with a larger granularity than the first QoS flow, it may be considered that a congestion occurs in the first QoS flow.

In an implementation, in a case that a congestion in an object with a granularity larger than the granularity of the first QoS flow ends, it is considered that the congestion in the first QoS flow ends.

In an implementation, in a case that a congestion level of an object with a granularity larger than the granularity of the first QoS flow changes (the level increases or decreases), it is considered that a congestion level of a data flow in the first QoS flow changes.

In an implementation, that a congestion starts or a congestion occurs includes at least one of the following: QoS cannot be met, a data sending rate is less than a data receiving rate of an N^{th} object, time domain resources are insufficient, a buffer overflows, and a queue overflows;
and/or
that a congestion starts or a congestion occurs in the N^{th} object includes at least one of the following: QoS of the N^{th} object cannot be met, a data sending rate of the N^{th} object is less than the data receiving rate of the N^{th} object, time domain resources of the N^{th} object are insufficient, a buffer for the N^{th} object overflows, and a queue of the N^{th} object overflows, where
the N^{th} object is any one of the following: the first object, the second object, and the third object.

Through embodiments of this application, UE performs uplink congestion monitoring and reporting according to an uplink congestion monitoring requirement, to implement that congestion monitoring and reporting of a QoS flow are performed on a UE side.

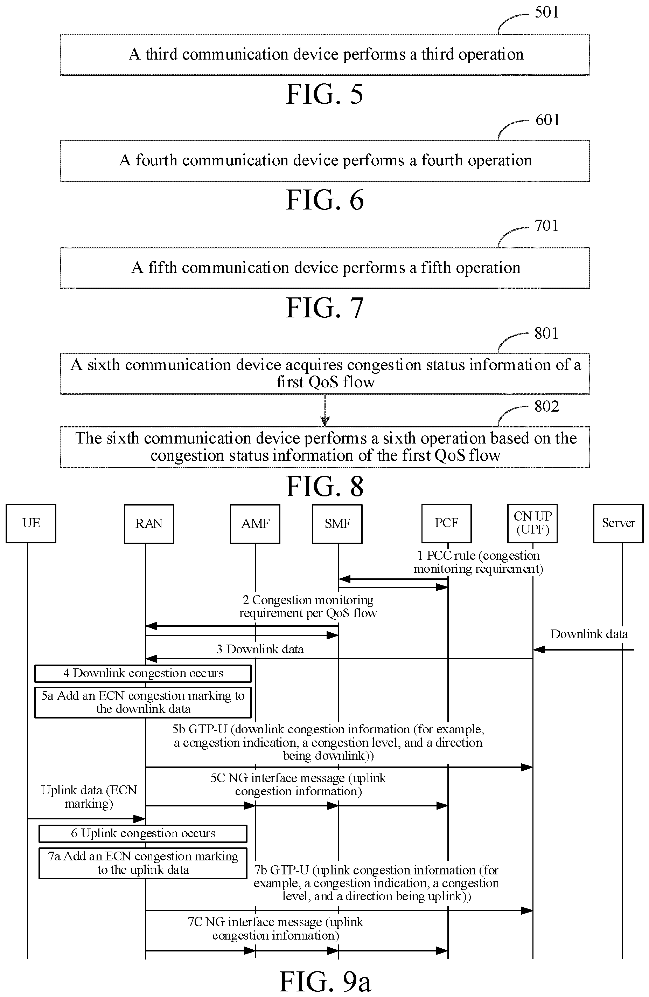

Referring to FIG. 5, embodiments of this application provide an information processing method, applied to a third communication device. The third communication device includes, but is not limited to, an access network element (for example, a RAN) or a core network element (for example, an SMF). The method includes:
Step 501: The third communication device performs a third operation.

The third operation includes one or more of the following:
mapping each QoS flow having a congestion monitoring requirement to an independent fourth object;
determining, based on whether a QoS flow has a congestion monitoring requirement, to map the QoS flow to a same fourth object or different fourth objects;
mapping one or more QoS flows having a congestion monitoring requirement to a same fourth object;
mapping one or more QoS flows having a congestion monitoring requirement to a target fourth object, where a QoS flow having no congestion monitoring requirement does not exist in the target fourth object; and
determining and/or saving a congestion monitoring requirement of a fourth object, where the congestion monitoring requirement of the fourth object meets congestion monitoring requirements of all QoS flows mapped to the fourth object, or, is the same as congestion monitoring requirements of all QoS flows mapped to the fourth object; and
the fourth object includes one or more of the following:
   a radio bearer; and
   a logical channel.

Optionally, that the QoS flow has the congestion monitoring requirement is: acquiring the congestion monitoring requirement corresponding to the QoS flow.

Optionally, the QoS flow may be one or more QoS flows.

In an implementation, the mapping each QoS flow having a congestion monitoring requirement to an independent fourth object is: the QoS flow and the fourth object have a one-to-one correspondence. Another QoS flow is not mapped to the fourth object. The one fourth object is dedicated to one QoS flow.

Optionally, the "determining, based on whether a QoS flow has a congestion monitoring requirement, to map the QoS flow to a same fourth object or different fourth objects" is: using whether a QoS flow has a congestion monitoring requirement as one of the factors that determine to map the QoS flow to a radio bearer (for example, a DRB) or a logical channel.

For example, a first QoS flow, a second QoS flow, and a third QoS flow may be mapped to one same DRB according to a related rule (QoS parameters are the same or similar). However, the first QoS flow and the second QoS flow have congestion monitoring requirements, and the third QoS flow has no congestion monitoring requirement. In an implementation, the first QoS flow and the second QoS flow are mapped to one same DRB (referred to as a first DRB). The first DRB is different from a second DRB (the second DRB is a DRB to which the third QoS flow is mapped). In another implementation, the first QoS flow and the second QoS flow are respectively mapped to two independent DRBs.

In an implementation, the determining, based on whether a QoS flow has a congestion monitoring requirement, to map the QoS flow to a same fourth object or different fourth objects includes any one of the following:
mapping a QoS flow having a congestion monitoring requirement and a QoS flow having no congestion monitoring requirement to different fourth objects; and
mapping, in a case that a second condition is met, a plurality of QoS flows to a same fourth object, where the second condition includes at least one of the following: the plurality of QoS flows all have congestion monitoring requirements, and the congestion monitoring requirements of the plurality of QoS flows are the same or compatible.

The plurality of QoS flows are data flows of two or more QoS flows.

The "mapping, in a case that a second condition is met, a plurality of QoS flows to a same fourth object, where the second condition includes that the QoS flows have congestion monitoring requirements" may be represented as: in a case that a plurality of QoS flows are mapped to a fourth object, the plurality of QoS flows all have congestion monitoring requirements.

The second condition may further include at least one of the following: 5QIs of the plurality of QoS flows are the same, and QoS parameters of the plurality of QoS flows are the same.

For example, when the first QoS flow and the second QoS flow both have congestion monitoring requirements and have the same 5QI, the two may be mapped to one same fourth object. For example, when the first QoS flow and the second QoS flow both have congestion monitoring requirements but different 5QIs, the first QoS flow and the second QoS flow are mapped to different QoS flows.

In a case that the congestion monitoring requirements of the plurality of QoS flows are the same, it is not difficult to understand that the congestion monitoring requirement of the fourth object and the congestion monitoring requirement of the QoS flows are the same.

In a case that the congestion monitoring requirements of the plurality of QoS flows are different, the congestion monitoring requirement of the fourth object needs to meet congestion monitoring requirements of all QoS flows mapped to the fourth object. For example, for congestion monitoring, a QoS flow 1 requires reporting once every half hour, and a QoS flow 2 requires reporting once every one hour. In this case, the fourth object may require reporting once every half hour. For example, the QoS flow 1 requires reporting when a congestion level 1 is met, and the QoS flow 2 requires reporting when a congestion level 2 is met. In this case, the fourth object may require reporting when either the congestion level 1 or 2 is met.

In an implementation, before the performing, by the third communication device, a third operation, the method further includes:
acquiring, by the third communication device, a congestion monitoring requirement corresponding to the QoS flow; and
performing, by the third communication device, the third operation according to the congestion monitoring requirement corresponding to the QoS flow.

It needs to be noted that, the QoS flow may be one or more QoS flows.

In an implementation, that the QoS flow has the congestion monitoring requirement includes: acquiring the congestion monitoring requirement corresponding to the QoS flow;
and/or
the congestion monitoring requirement corresponding to the QoS flow is configured for requiring one or more of the following:
monitoring and/or reporting a congestion status of the QoS flow;
monitoring and/or reporting a congestion status of a fourth object to which the QoS flow is mapped;
using the congestion status of the fourth object to which the QoS flow is mapped as the congestion status of the QoS flow; and
reporting the congestion status of the fourth object or reporting the congestion status of the QoS flow through signaling corresponding to the QoS flow and/or a data packet in the QoS flow;
   and/or
a parameter in the congestion monitoring requirement corresponding to the QoS flow includes one or more of the following:
information configured for indicating that uplink and/or downlink congestion monitoring requires to be performed, a reporting event, a reporting frequency, and information configured for describing a congestion level.

In an implementation, the reporting the congestion status of the fourth object or reporting the congestion status of the QoS flow through signaling corresponding to the QoS flow and/or a data packet in the QoS flow includes:
sending uplink and/or downlink congestion status information of the fourth object or reporting uplink and/or downlink congestion status information of the QoS flow through an information element and/or a first interface message corresponding to the QoS flow;
   or
the reporting the congestion status of the fourth object or reporting the congestion status of the QoS flow through a data packet in the QoS flow includes at least one of the following:
making a packet header of the data packet in the QoS flow carry congestion status information of the fourth object or congestion status information of the QoS flow; and
sending the data packet in the QoS flow to a second interface,
where
a first interface is a control plane interface between a core network and an access network; and
a second interface is a user plane interface between the core network and the access network.

In an implementation, the using the congestion status of the fourth object to which the QoS flow is mapped as the congestion status of the QoS flow includes at least one of the following:
determining, in a case that a congestion occurs in the fourth object, that a congestion occurs in the QoS flow;
determining, in a case that the congestion in the fourth object ends, that the congestion in the QoS flow ends;
determining, in a case that the congestion in the fourth object escalates, that the congestion in the QoS flow escalates;
determining, in a case that the congestion in the fourth object de-escalates, that the congestion in the QoS flow de-escalates; and
using congestion status information of the fourth object as congestion status information of the QoS flow.

In an implementation, the congestion status includes one or more of the following:
a congestion starts or a congestion occurs;
a congestion ends or no congestion occurs; and
a congestion level;
   and/or
an uplink congestion status includes one or more of the following:
an uplink congestion starts or an uplink congestion occurs;
an uplink congestion ends or no uplink congestion occurs; and
a congestion level or an uplink congestion level;
   and/or
a downlink congestion status includes one or more of the following:
a downlink congestion starts or a downlink congestion occurs;
a downlink congestion ends or no downlink congestion occurs; and
a congestion level or an uplink congestion level;
   and/or
the congestion status information, downlink congestion status information, and/or uplink congestion status information includes one or more of the following:
first information, configured for indicating that a congestion starts or a congestion occurs;
second information, configured for indicating that a congestion ends or no congestion occurs; and
third information, configured for indicating a congestion level;
   and/or
the uplink congestion status information includes one or more of the following:
fourth information, configured for indicating that an uplink congestion starts or an uplink congestion occurs;
fifth information, configured for indicating that an uplink congestion ends or no uplink congestion occurs; and
sixth information, configured for indicating a congestion level or an uplink congestion level;
   and/or
the downlink congestion status information includes one or more of the following:
seventh information, configured for indicating that a downlink congestion starts or a downlink congestion occurs;
eighth information, configured for indicating that a downlink congestion ends or no downlink congestion occurs; and
ninth information, configured for indicating a congestion level or a downlink congestion level.

That a congestion starts or a congestion occurs includes at least one of the following: QoS cannot be met, a data sending rate is less than a data receiving rate of an N^{th} object, time domain resources are insufficient, a buffer overflows, and a queue overflows;
and/or
that a congestion starts or a congestion occurs in the QoS flow includes at least one of the following: QoS of the QoS flow cannot be met, a data sending rate of the QoS flow is less than a data receiving rate of the QoS flow, time domain resources of the QoS flow are insufficient, a buffer for the QoS flow overflows, and a queue of the QoS flow overflows;
   and/or
that a congestion starts or a congestion occurs in the fourth object includes at least one of the following: QoS of the fourth object cannot be met, a data sending rate of the fourth object is less than the data receiving rate of the fourth object, time domain resources of the fourth object are insufficient, a buffer for the fourth object overflows, and a queue of the fourth object overflows.

Through embodiments of this application, a QoS flow is mapped to a fourth object with a larger granularity. In this way, a congestion status of the QoS flow can be obtained by performing congestion monitoring on the fourth object.

Referring to FIG. 6, embodiments of this application provide an information processing method, applied to a fourth communication device. The fourth communication device includes, but is not limited to, a core network element (for example, an SMF or a PCF). The method includes:
Step 601: The fourth communication device performs a fourth operation.

The fourth operation includes one or more of the following:
mapping each service data flow having a congestion monitoring requirement to an independent QoS flow;
determining, based on whether a service data flow has a congestion monitoring requirement, to map the service data flow to a same QoS flow or different QoS flows;
mapping one or more service data flows having a congestion monitoring requirement to a same QoS flow;
mapping one or more service data flows having a congestion monitoring requirement to a target QoS flow, where a service data flow having no congestion monitoring requirement does not exist in the target QoS flow;
determining and/or saving a congestion monitoring requirement corresponding to the QoS flow, where the congestion monitoring requirement corresponding to the QoS flow meets congestion monitoring requirements of all service flows to which the QoS flow is mapped, or, is the same as congestion monitoring requirements of all service data flows to which the QoS flow is mapped;
using a congestion status of the QoS flow to which the service data flow is mapped as a congestion status of the service data flow; and
sending the congestion monitoring requirement corresponding to the QoS flow.

In an example, the congestion monitoring requirement corresponding to the QoS flow is sent to a third target end. The third target end includes at least one of the following: a first communication device, a second communication device, a sixth communication device, UE, a RAN network element, and a UPF.

In an implementation, the mapping each service data flow having a congestion monitoring requirement to an independent QoS flow is: the service data flow and the QoS flow have a one-to-one correspondence. Another service data flow is not mapped to the QoS flow. One QoS flow is dedicated to one service data flow.

In an implementation, the "determining, based on whether a service data flow has a congestion monitoring requirement, to map the service data flow to a same QoS flow or different QoS flows" is: using whether a service data flow has a congestion monitoring requirement as one of the factors that determine to map the service data flow to the QoS flow.

For example, a first service data flow, a second service data flow, and a third service data flow may be mapped to one same QoS flow according to a related rule (service data flows are the same or similar). However, the first service data flow and the second service data flow have congestion monitoring requirements, and the third service data flow has no congestion monitoring requirement. In an implementation, the first service data flow and the second service data flow are mapped to one same QoS flow (referred to as a first QoS flow). The first QoS flow is different from a second QoS flow (the second QoS flow is a QoS flow to which the third service data flow is mapped). In another implementation, the first service data flow and the second service data flow are respectively mapped to two independent QoS flows.

In an implementation, the determining, based on whether a service data flow has a congestion monitoring requirement, to map the service data flow to a same QoS flow or different QoS flows includes any one of the following:
mapping a service data flow having a congestion monitoring requirement and a service data flow having no congestion monitoring requirement to different QoS flows; and
mapping, in a case that a third condition is met, a plurality of service data flows to a same QoS flow, where the third condition includes at least one of the following: the plurality of service data flows all have congestion monitoring requirements, and the congestion monitoring requirements of the plurality of service data flows are the same or compatible.

It needs to be noted that the plurality of service data flows are two or more service data flows.

The "mapping, in a case that a third condition is met, a plurality of service data flows to a same QoS flow, where the third condition includes that the service data flows have congestion monitoring requirements" may be reflected as: in a case that a plurality of service data flows are mapped to a QoS flow, the plurality of service data flows all have congestion monitoring requirements.

The second condition may further include at least one of the following: 5QIs of the plurality of service data flows are the same, and QoS parameters of the plurality of service data flows are the same.

For example, the first service data flow and the second service data flow both have congestion monitoring requirements and the same 5QI, and the two may be mapped to one same QoS flow.

For example, the first service data flow and the second service data flow both have congestion monitoring requirements but different 5QIs, in this case, the first service data flow and the second service data flow are mapped to different QoS flows.

In a case that the congestion monitoring requirements of the plurality of service data flows are the same, it is not difficult to understand that the congestion monitoring requirement of the QoS flow and the congestion monitoring requirement of the service data flows are the same.

**In** a case that the congestion monitoring requirements of the plurality of service data flows are different, the congestion monitoring requirement of the QoS flow needs to meet congestion monitoring requirements of all service data flows mapped to a fourth object. For example, for congestion monitoring, a service data flow 1 requires reporting once every half hour, and a service data flow 2 requires reporting once every one hour. In this case, the QoS flow may require reporting once every half hour. For example, the service data flow 1 requires reporting when a congestion level 1 is met, and the service data flow 2 requires reporting when a congestion level 2 is met. In this case, the QoS flow may require reporting when either the congestion level 1 or 2 is met.

**In** an implementation, before the performing, by the fourth communication device, the fourth operation, the method further includes:
acquiring, by the fourth communication device, a congestion monitoring requirement corresponding to the service data flow; and
performing, by the fourth communication device, the fourth operation according to the congestion monitoring requirement corresponding to the service data flow.

It needs to be noted that, the service data flows may be one or more service data flows.

**In** an implementation, the congestion monitoring requirement corresponding to the service data flow is acquired from a first source end. The first source end includes at least one of the following: a PCF, an AF, and a NEF.

**In** an implementation, that the service data flow has the congestion monitoring requirement includes: acquiring the congestion monitoring requirement corresponding to the service data flow;
and/or
the congestion monitoring requirement corresponding to the service data flow is configured for requiring one or more of the following:
monitoring and/or reporting the congestion status of the service data;
monitoring and/or reporting the congestion status of the QoS flow to which the service data is mapped; and
reporting the congestion status of the QoS flow or reporting the congestion status of the service data flow through signaling corresponding to the service data flow and/or a data packet in the service data flow;
   and/or
the congestion monitoring requirement corresponding to the QoS flow is configured for requiring one or more of the following:
monitoring and/or reporting the congestion status of the QoS flow;
monitoring and/or reporting a congestion status of the fourth object to which the QoS flow is mapped; and
reporting the congestion status of the fourth object or the congestion status of the QoS flow through signaling corresponding to the QoS flow and/or a data packet in the QoS flow;
   and/or
a parameter in the congestion monitoring requirement corresponding to the service data flow, or, a parameter in the congestion monitoring requirement corresponding to the QoS flow includes one or more of the following:
information configured for indicating that uplink and/or downlink congestion monitoring requires to be performed, a reporting event, a reporting frequency, and information configured for describing a congestion level.

In an implementation, the reporting the congestion status of the QoS flow or reporting the congestion status of the service data flow through signaling corresponding to the service data flow and/or a data packet in the service data flow includes:
sending uplink and/or downlink congestion status information of the QoS flow or reporting uplink and/or downlink congestion status information of the service data flow through an information element and/or a third interface message corresponding to the service data flow;
   or
the reporting the congestion status of the QoS flow or reporting the congestion status of the service data flow through a data packet in the service data flow includes at least one of the following:
   making a packet header of the data packet in the service data flow carry congestion status information of the QoS flow or congestion status information of the service data flow; and
   sending the data packet in the service data flow to a fourth interface,
   where
   a third interface is one of the following: an N4 interface, and an interface between an SMF and a PCF; and
   the fourth interface is an N6 interface.

In an implementation, the using a congestion status of the QoS flow to which the service data flow is mapped as a congestion status of the service data flow includes at least one of the following:
determining, in a case that a congestion occurs in the QoS flow, that a congestion occurs in the service data flow;
determining, in a case that the congestion in the QoS flow ends, that the congestion in the service data flow ends;
determining, in a case that the congestion in the QoS flow escalates, that the congestion in the service data flow escalates;
determining, in a case that the congestion in the QoS flow de-escalates, that the congestion in the service data flow de-escalates; and
using the congestion status information of the QoS flow as the congestion status information of the service data flow.

In an implementation, the reporting the congestion status of the fourth object or reporting the congestion status of the QoS flow through signaling corresponding to the QoS flow and/or a data packet in the QoS flow includes:
sending uplink and/or downlink congestion status information of the fourth object or reporting uplink and/or downlink congestion status information of the QoS flow through an information element and/or a first interface message corresponding to the QoS flow;
   or
the reporting the congestion status of the fourth object or reporting the congestion status of the QoS flow through a data packet in the QoS flow includes at least one of the following:
   making a packet header of the data packet in the QoS flow carry congestion status information of the fourth object or congestion status information of the QoS flow; and
   sending the data packet in the QoS flow to a second interface,
   where
   a first interface is a control plane interface between a core network and an access network; and
   a second interface is a user plane interface between the core network and the access network.

In an implementation, the using the congestion status of the fourth object to which the QoS flow is mapped as the congestion status of the QoS flow includes at least one of the following:
determining, in a case that a congestion occurs in the fourth object, that a congestion occurs in the QoS flow;
determining, in a case that the congestion in the fourth object ends, that the congestion in the QoS flow ends;
determining, in a case that the congestion in the fourth object escalates, that the congestion in the QoS flow escalates;
determining, in a case that the congestion in the fourth object de-escalates, that the congestion in the QoS flow de-escalates; and
using congestion status information of the fourth object as congestion status information of the QoS flow.

In an implementation, the congestion status includes one or more of the following:
a congestion starts or a congestion occurs;
a congestion ends or no congestion occurs; and
a congestion level;
   and/or
an uplink congestion status includes one or more of the following:
   an uplink congestion starts or an uplink congestion occurs;
   an uplink congestion ends or no uplink congestion occurs; and
   a congestion level or an uplink congestion level;
      and/or
   a downlink congestion status includes one or more of the following:
   a downlink congestion starts or a downlink congestion occurs;
   a downlink congestion ends or no downlink congestion occurs; and
   a congestion level or an uplink congestion level;
      and/or
   the congestion status information, downlink congestion status information, and/or uplink congestion status information includes one or more of the following:
   first information, configured for indicating that a congestion starts or a congestion occurs;
   second information, configured for indicating that a congestion ends or no congestion occurs; and
   third information, configured for indicating a congestion level;
      and/or
   the uplink congestion status information includes one or more of the following:
   fourth information, configured for indicating that an uplink congestion starts or an uplink congestion occurs;
   fifth information, configured for indicating that an uplink congestion ends or no uplink congestion occurs; and
   sixth information, configured for indicating a congestion level or an uplink congestion level;
      and/or
   the downlink congestion status information includes one or more of the following:
   seventh information, configured for indicating that a downlink congestion starts or a downlink congestion occurs;
   eighth information, configured for indicating that a downlink congestion ends or no downlink congestion occurs; and
   ninth information, configured for indicating a congestion level or a downlink congestion level.
   that a congestion starts or a congestion occurs in the QoS flow includes at least one of the following: QoS of the QoS flow cannot be met, a data sending rate of the QoS flow is less than a data receiving rate of the QoS flow, time domain resources of the QoS flow are insufficient, a buffer for the QoS flow overflows, and a queue of the QoS flow overflows;
      and/or
   that a congestion starts or a congestion occurs in the service data flow includes at least one of the following: QoS of the service data flow cannot be met, a data sending rate of the service data flow is less than a data receiving rate of the service data flow, time domain resources of the service data flow are insufficient, a buffer for the service data flow overflows, and a queue of the service data flow overflows.

Through embodiments of this application, a service data flow is mapped to a QoS flow. In this way, a congestion status of the service data flow can be obtained by performing congestion monitoring on the QoS flow.

Referring to FIG. 7, embodiments of this application provide an information processing method, applied to a fifth communication device. The fifth communication device includes, but is not limited to, a core network element (for example, a PCF or an SMF). The method includes:
Step 701: The fifth communication device performs a fifth operation.

The fifth operation includes at least one of the following:
determining a congestion monitoring requirement corresponding to a first QoS flow;
sending the congestion monitoring requirement corresponding to the first QoS flow;
determining a first requirement; and
sending the first requirement, where
the first requirement is an uplink congestion monitoring requirement corresponding to the first QoS flow, and/or, the first requirement is configured for requiring one or more of the following:
monitoring and/or reporting an uplink congestion status of a second object;
reporting the uplink congestion status of the second object through signaling corresponding to a third object and/or a data packet in the third object; and
using a congestion status of the second object as a congestion status of the third object;
the second object includes one or more of the following:
the first QoS flow;
a first radio bearer;
a first logical channel; and
a first logical channel group; and
the third object includes one or more of the following:
the first QoS flow;
the first radio bearer;
the first logical channel; and
the first logical channel group.

In an example, the congestion monitoring requirement corresponding to the first QoS flow is sent to a fourth target end. The fourth target end includes one or more of the following: a first communication device, a sixth communication device, a terminal, a RAN, and a UPF.

In an implementation, the first requirement is sent to a fifth target end. The fifth target end includes one or more of the following: a terminal.

In an implementation, the congestion monitoring requirement corresponding to the first QoS flow is configured for requiring one or more of the following:
monitoring and/or reporting a congestion status of the first QoS flow;
monitoring and/or reporting a congestion status of a first object; and
reporting the congestion status of the first object or reporting the congestion status of the first QoS flow through signaling corresponding to the first QoS flow and/or a data packet in the first QoS flow;
   and/or
a parameter in the congestion monitoring requirement corresponding to the first QoS flow includes one or more of the following:
information configured for indicating that uplink and/or downlink congestion monitoring requires to be performed, a reporting event, a reporting frequency, and information configured for describing a congestion level.

In an implementation, the first object includes one or more of the following:
the first QoS flow;
the first radio bearer;
the first logical channel; and
the first logical channel group;
a first cell; and
the first communication device or a first RAN network element.

The foregoing first RAN network element is a RAN network element that allocates a radio resource to the first QoS flow.

In an implementation, the step of performing a fifth operation includes: acquiring a congestion monitoring requirement corresponding to a first service data flow, and performing the fifth operation according to the congestion monitoring requirement corresponding to the first service data flow, where
the first service data flow is a service data flow to which the first QoS flow is mapped.

In an implementation, the congestion monitoring requirement corresponding to the first service data flow is configured for requiring one or more of the following:
monitoring and/or reporting a congestion status of the first service data;
monitoring and/or reporting a congestion status of the first QoS flow; and
reporting the congestion status of the first QoS flow or reporting the congestion status of the first service data flow through signaling corresponding to the first service data flow and/or a data packet in the service data flow.

Through embodiments of this application, a congestion monitoring requirement and/or a first requirement corresponding to a first QoS flow is sent, and a corresponding device performs a congestion monitoring operation.

Referring to FIG. 8, embodiments of this application provide an information processing method, applied to a sixth communication device. The sixth communication device includes, but is not limited to, a core network element (for example, one of the following: a UPF, an SMF, a PCF, a NEF, and an AF). The method includes:
Step 801: The sixth communication device acquires congestion status information of a first QoS flow.
Step 802: The sixth communication device performs a sixth operation based on the congestion status information of the first QoS flow.

The sixth operation includes at least one of the following:
determining a congestion status of a first service data flow; and
sending congestion status information of the first service data flow, where
the first service data flow is a service data flow to which the first QoS flow is mapped.

In an implementation, the congestion status information of the first QoS flow is acquired from a second source end. The second source end includes one or more of the following: a first communication device, and a terminal.

In an implementation, a plurality of service data flows may be mapped to one QoS flow. In other words, data of the plurality of service data flows may be transferred through one QoS flow. Generally, one service data flow may be mapped to one QoS flow, or may be mapped to a plurality of QoS flows.

The first service data flow may be all service data flows of the first QoS flow, or the first QoS flow has a service data flow with a congestion monitoring requirement.

In an implementation, the determining, by the sixth communication device, a congestion status of a first service data flow based on the congestion status information of the first QoS flow includes at least one of the following:
determining, in a case that a congestion occurs in the first QoS flow, that a congestion occurs in the first service data flow;
determining, in a case that the congestion in the first QoS flow ends, that the congestion in the first service data flow ends;
determining, in a case that the congestion in the first QoS flow escalates, that the congestion in the first service data flow escalates;
determining, in a case that the congestion in the first QoS flow de-escalates, that the congestion in the first service data flow de-escalates; and
using the congestion status information of the first QoS flow as the congestion status information of the first service data flow.

In an implementation, the determining, in a case that a congestion occurs in the first QoS flow, that a congestion occurs in the first service data flow includes at least one of the following: determining, in a case that an uplink congestion occurs in the first QoS flow, that an uplink congestion occurs in the first service data flow; and determining, in a case that a downlink congestion occurs in the first QoS flow, that a downlink congestion occurs in the first service data flow;
the determining, in a case that the congestion in the first QoS flow ends, that the congestion in the first service data flow ends includes at least one of the following: determining, in a case that the uplink congestion in the first QoS flow ends, that the uplink congestion in the first service data flow ends; and determining, in a case that the downlink congestion in the first QoS flow ends, that the downlink congestion in the first service data flow ends;
the determining, in a case that the congestion in the first QoS flow escalates, that the congestion in the first service data flow escalates includes at least one of the following: determining, in a case that the uplink congestion in the first QoS flow escalates, that the uplink congestion in the first service data flow escalates; and determining, in a case that the downlink congestion in the first QoS flow escalates, that the downlink congestion in the first service data flow escalates;
the determining, in a case that the congestion in the first QoS flow de-escalates, that the congestion in the first service data flow de-escalates includes at least one of the following: determining, in a case that the uplink congestion in the first QoS flow de-escalates, that the uplink congestion in the first service data flow de-escalates; and determining, in a case that the downlink congestion in the first QoS flow de-escalates, that the downlink congestion in the first service data flow de-escalates; and
the using the congestion status information of the first QoS flow as the congestion status information of the first service data flow includes at least one of the following: using uplink congestion status information of the first QoS flow as uplink congestion status information of the first service data flow; and using downlink congestion status information of the first QoS flow as downlink congestion status information of the first service data flow.

In an implementation, the congestion status includes one or more of the following:
a congestion starts or a congestion occurs;
a congestion ends or no congestion occurs; and
a congestion level;
   and/or
an uplink congestion status includes one or more of the following:
   an uplink congestion starts or an uplink congestion occurs;
   an uplink congestion ends or no uplink congestion occurs; and
   a congestion level or an uplink congestion level;
      and/or
   a downlink congestion status includes one or more of the following:
      a downlink congestion starts or a downlink congestion occurs;
      a downlink congestion ends or no downlink congestion occurs; and
      a congestion level or an uplink congestion level;
         and/or
      the congestion status information, downlink congestion status information, and/or uplink congestion status information includes one or more of the following:
         first information, configured for indicating that a congestion starts or a congestion occurs;
         second information, configured for indicating that a congestion ends or no congestion occurs; and
         third information, configured for indicating a congestion level;
            and/or
         the uplink congestion status information includes one or more of the following:
            fourth information, configured for indicating that an uplink congestion starts or an uplink congestion occurs;
            fifth information, configured for indicating that an uplink congestion ends or no uplink congestion occurs; and
            sixth information, configured for indicating a congestion level or an uplink congestion level;
               and/or
            the downlink congestion status information includes one or more of the following:
               seventh information, configured for indicating that a downlink congestion starts or a downlink congestion occurs;
               eighth information, configured for indicating that a downlink congestion ends or no downlink congestion occurs; and
               ninth information, configured for indicating a congestion level or a downlink congestion level.

In an implementation, the method further includes at least one of the following:
determining, in a case that a fourth condition is met, that an uplink congestion occurs in the first QoS flow, where
the fourth condition includes: an uplink data packet in the first QoS flow carries the first information and/or the third information, and the fourth information or the sixth information is received;
determining, in a case that a fifth condition is met, that a downlink congestion occurs in the first QoS flow, where
the fifth condition includes: a downlink data packet in the first QoS flow carries the first information and/or the third information, the uplink data packet in the first QoS flow carries the seventh information and/or the ninth information, and the seventh information and/or the ninth information is received through signaling;
determining, in a case that a sixth condition is met, that the uplink congestion in the first service data flow ends, where
the sixth condition includes: the uplink data packet in the first QoS flow carries the second information, and the fifth information is received;
determining, in a case that a seventh condition is met, that the downlink congestion in the first QoS flow ends, where
the seventh condition includes: the downlink data packet in the first QoS flow carries the second information, the uplink data packet in the first QoS flow carries the eighth information, and the eighth information is received through signaling;
determining, in a case that an eighth condition is met, that the uplink congestion in the first service data flow escalates, where
the eighth condition includes: the uplink data packet in the first QoS flow carries the first information and/or the third information, and the fourth information or the sixth information is received;
determining, in a case that a ninth condition is met, that the downlink congestion in the first QoS flow escalates, where
the ninth condition includes: the downlink data packet in the first QoS flow carries the first information and/or the third information, the uplink data packet in the first QoS flow carries the seventh information and/or the ninth information, and the seventh information and/or the ninth information is received through signaling;
determining, in a case that a tenth condition is met, that the uplink congestion in the first service data flow de-escalates, where
the tenth condition includes: the uplink data packet in the first QoS flow carries the first information and/or the third information, and the fourth information or the sixth information is received;
determining, in a case that an eleventh condition is met, that the downlink congestion in the first QoS flow de-escalates, where
the eleventh condition includes: the downlink data packet in the first QoS flow carries the first information and/or the third information, the uplink data packet in the first QoS flow carries the seventh information and/or the ninth information, and the seventh information and/or the ninth information is received through signaling;
determining, in a case that a twelfth condition is met, the uplink congestion status information of the first QoS flow, where
the twelfth condition includes: the uplink data packet in the first QoS flow carries the first information, the second information, and/or the third information, and the fourth information, the fifth information, or the sixth information is received; and
determining, in a case that a thirteenth condition is met, the uplink congestion status information of the first QoS flow, where
the thirteenth condition includes: the downlink data packet in the first QoS flow carries the first information, the second information, and/or the third information, the uplink data packet in the first QoS flow carries the seventh information, the eighth information, and/or the ninth information, and the seventh information, the eighth information, and/or the ninth information is received through signaling.

In an implementation, the acquiring, by the sixth communication device, congestion status information of a first QoS flow includes:
acquiring, by the sixth communication device, congestion status information of a first object or the congestion status information of the first QoS flow through signaling corresponding to the first QoS flow and/or a data packet in the first QoS flow, where
the first object includes one or more of the following:
   a first radio bearer;
   a first logical channel;
   a first logical channel group;
   a first cell; and
   the first communication device or a first RAN network element.

In an implementation, the acquiring, by the sixth communication device, congestion status information of a first object or the congestion status information of the first QoS flow through signaling corresponding to the first QoS flow includes:
acquiring, by the sixth communication device, the congestion status information of the first object or the congestion status information of the first QoS flow through an information element corresponding to the first QoS flow and/or a first interface message, where
   or
the acquiring, by the sixth communication device, congestion status information of a first object or the congestion status information of the first QoS flow through a data packet in the first QoS flow includes:
acquiring, by the sixth communication device, the congestion status information of the first object or the congestion status information of the first QoS flow through the congestion status information of the first object carried in a packet header of the data packet in the first QoS flow,
where
a first interface is a control plane interface between a core network and an access network; and
a second interface is a user plane interface between the core network and the access network.

In an implementation, the acquiring the congestion status information of the first object or the congestion status information of the first QoS flow through the congestion status information of the first object carried in a packet header of the data packet in the first QoS flow includes:
acquiring congestion status information through a packet header of an uplink data packet in the first QoS flow, where the congestion status information is information describing an uplink congestion status of the first object or an uplink congestion status of the first QoS flow;
acquiring congestion status information through a packet header of a downlink data packet in the first QoS flow, where the congestion status information is information describing a downlink congestion status of the first object or a downlink congestion status of the first QoS flow;
acquiring uplink congestion status information through the packet header of the uplink data packet in the first QoS flow, where the uplink congestion status information is the information describing the uplink congestion status of the first object or the uplink congestion status of the first QoS flow; and
acquiring downlink congestion status information through the packet header of the uplink data packet in the first QoS flow, where the downlink congestion status information is the information describing the downlink congestion status of the first object or the downlink congestion status of the first QoS flow.

In an implementation, the performing, by the sixth communication device, a sixth operation based on the congestion status information of the first QoS flow includes:
acquiring a congestion monitoring requirement corresponding to the first QoS flow, and/or, a congestion monitoring requirement corresponding to the first service data flow, and
according to the congestion monitoring requirement corresponding to the first QoS flow, and/or, the congestion monitoring requirement corresponding to the first service data flow, performing: performing, by the sixth communication device, the sixth operation based on the congestion status information of the first QoS flow.

In an implementation, the congestion monitoring requirement corresponding to the first service data flow is configured for requiring one or more of the following:
monitoring and/or reporting a congestion status of the first service data;
monitoring and/or reporting a congestion status of the first QoS flow; and
reporting the congestion status of the first QoS flow or reporting the congestion status of the first service data flow through signaling corresponding to the first service data flow and/or a data packet in the service data flow.

Through embodiments of this application, based on acquired congestion status information of a QoS flow, a congestion status of a first service data flow is determined, and/or, congestion status information of the first service data flow is sent, thereby implementing congestion monitoring and reporting with a granularity of a service data flow.

The following describes technical solutions of this application with reference to the specific application scenarios.

Referring to FIG. 9a, an application scenario 1 in embodiments of this application mainly describes that a CN indicates a RAN to perform congestion monitoring and reporting of a first QoS flow, including an uplink direction and a downlink direction. Note: A terminal is not affected in this solution, and therefore monitoring of a congestion at an air interface is not supported in an uplink, and only monitoring of a congestion at an N3 interface is supported. Monitoring of a congestion at the air interface in a downlink is supported.

As shown in steps 1 and 2, a core network element sends the congestion monitoring requirement corresponding to a first QoS flow to the RAN. Details are as follows.

Step 1: A PCF sends a policy and charging control rule (Policy and Charging Control Rule, PCC rule) carrying the congestion monitoring requirement to an SMF. Step 2: The SMF sends the congestion monitoring requirement corresponding to the first QoS flow to the RAN.

The SMF may determine the congestion monitoring requirement of the first QoS flow according to a congestion monitoring requirement of a first service data flow, as shown in the embodiment in FIG. 6 or FIG. 7. Details are not described again herein.

Step 3: A user plane (for example, a UPF) of the CN sends downlink data to the RAN.

Step 4: In a case that a downlink congestion occurs in a first DRB, the RAN performs a first operation according to the congestion monitoring requirement corresponding to the first QoS flow, for example, reports a congestion status of a first object (for example, the first DRB) or reports a congestion status of the first QoS flow through signaling corresponding to the first QoS flow and/or a data packet in the first QoS flow. The process may enter step 5a and step 5b.

Step 5a: Add an ECN marking (for example, a CE value) corresponding to a congestion to downlink data that supports L4S (ECT (1)) in the first DRB.

Step 5b: Make a packet header of the data packet in the first QoS flow carry congestion status information of the first QoS flow, for example, report downlink congestion information through a GTP-U header corresponding to the first QoS flow. Because both uplink and downlink congestions need to be reported through the GTP-U header corresponding to the first QoS flow, direction information needs to be carried in congestion information in a GTP-U. For example, a packet header of an uplink data packet in the first QoS flow carries uplink congestion status information, where the uplink congestion status information is information describing an uplink congestion status of the first object or an uplink congestion status of the first QoS flow. The packet header of the uplink data packet in the first QoS flow carries downlink congestion status information, where the downlink congestion status information is information describing a downlink congestion status of the first object or a downlink congestion status of the first QoS flow.

Step 5C: Report the downlink congestion information through an NG interface message.

Step 6: In a case that an uplink congestion occurs in the first QoS flow in a service data adaptation protocol (Service Data Adaptation Protocol, SDAP) layer or above the SDAP layer, the process may enter step 7a or step 7b. Because the terminal is not affected in this embodiment, monitoring of a congestion at the air interface is not supported, and only a congestion status of data that has already reached the RAN is queued at the RAN to wait to be sent to the N3 interface can be monitored in the uplink. If a congestion that occurs in a case that the RAN sends data to a UPF, the congestion is reported.

Step 7a: Add an ECN marking (for example, a CE value) corresponding to a congestion to uplink data that supports L4S (ECT (1)) in the first QoS.

Step 7b: Make a packet header of the data packet in the first QoS flow carry congestion status information of the first QoS flow, for example, report downlink congestion information through a GTP-U header corresponding to the first QoS flow. Because both uplink and downlink congestions need to be reported through the GTP-U header corresponding to the first QoS flow, direction information needs to be carried in congestion information in a GTP-U. For example, a packet header of an uplink data packet in the first QoS flow carries uplink congestion status information, where the uplink congestion status information is information describing an uplink congestion status of the first object or an uplink congestion status of the first QoS flow. The packet header of the uplink data packet in the first QoS flow carries downlink congestion status information, where the downlink congestion status information is information describing a downlink congestion status of the first object or a downlink congestion status of the first QoS flow.

Step 5C: Report uplink congestion information through an NG interface message. An AMF then forwards the uplink congestion information to the SMF, and the SMF then forwards the uplink congestion information to the PCF.

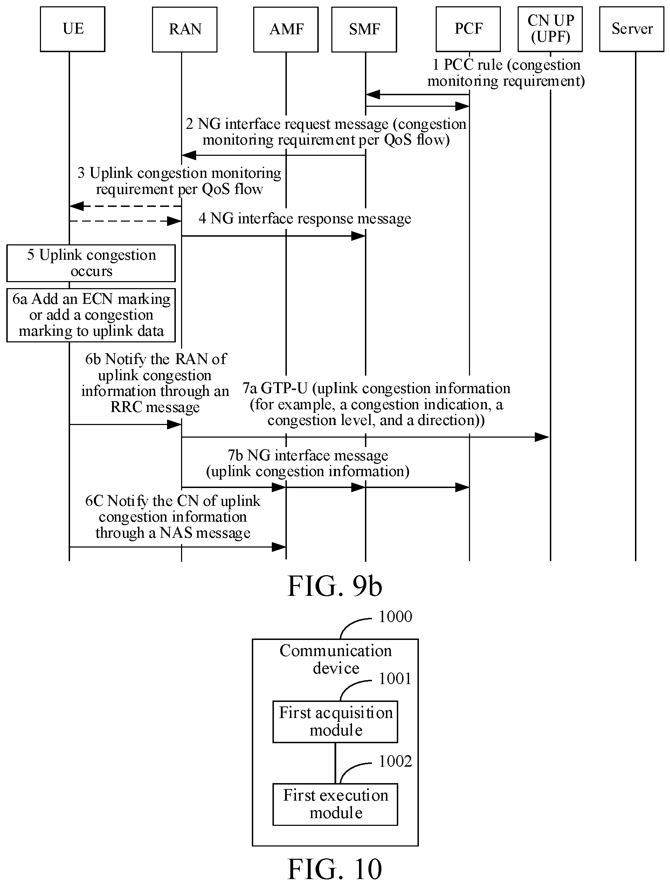

Referring to FIG. 9b, an application scenario 2 in embodiments of this application mainly describes that a CN indicates a RAN to perform congestion monitoring and reporting of a first QoS flow, and it is particularly described that congestion monitoring in an uplink direction is performed by UE. The UE is affected in this implementation, but monitoring of a congestion at an air interface can be supported.

As shown in steps 1 and 2, a core network element sends a congestion monitoring requirement corresponding to the first QoS flow to the RAN. Details are as follows.

Step 1: A PCF sends a policy and charging control rule (Policy and Charging Control Rule, PCC rule) carrying a congestion monitoring requirement of a first service data flow to an SMF.

Step 2: The SMF sends the congestion monitoring requirement of the first QoS flow, for example, through an NG interface request message.

The SMF may determine the congestion monitoring requirement of the first QoS flow according to the congestion monitoring requirement of the first service data flow, as shown in the embodiment in FIG. 6 or FIG. 7. Details are not described again herein.

Step 3: The RAN sends an uplink congestion monitoring requirement of the first QoS to the UE.

In an implementation, in a case that the congestion monitoring requirement of the first QoS flow includes the uplink congestion monitoring requirement, the RAN sends the uplink congestion monitoring requirement, i.e., a first requirement, of the first QoS to the UE.

Step 4: The RAN sends an NG interface response message to the SMF.

Step 5: In a case that an uplink congestion occurs in a first DRB or the first QoS flow, the UE performs a second operation according to the first requirement, for example, sends one of the following through an information element and/or a Uu interface message corresponding to a third object (for example, the first DRB or the first QoS flow): congestion status information of a second object (for example, the first DRB or the first QoS flow), congestion status information of the third object, uplink congestion status information of the second object, uplink congestion status information of the third object, where specifically, the process may enter step 6a or step 6b. On a UE side, it is possible that a congestion with a granularity of a QoS flow can be monitored.

Step 6a: Add an ECN marking (for example, a CE value) corresponding to a congestion or an indication (another congestion indication different from the ECN marking) corresponding to a congestion to uplink data that supports L4S (ECT (1)) in the first DRB or the first QoS flow.

Step 6b: Report uplink congestion information to the RAN through RRC signaling.

Step 6C: Report the uplink congestion information to the CN through NAS signaling.

Step 7a: Optionally, report the uplink congestion information through a GTP-U header corresponding to the first QoS flow in a non-ECN marking manner.

Step 7b: Optionally, report the uplink congestion information through an NG message in a non-ECN marking manner.

Referring to FIG. 10, embodiments of this application provide a communication device 1000. The apparatus may be used in the foregoing first communication device. The apparatus includes:
a first acquisition module 1001, configured to acquire a congestion monitoring requirement corresponding to a first QoS flow; and
a first execution module 1002, configured to perform a first operation according to the congestion monitoring requirement corresponding to the first QoS flow, where
the first operation includes one or more of the following:
monitoring a congestion status of a first object;
using the congestion status of the first object as a congestion status of the first QoS flow;
reporting the congestion status of the first object or reporting the congestion status of the first QoS flow through signaling corresponding to the first QoS flow and/or a data packet in the first QoS flow;
mapping the first QoS flow to a first radio bearer; and
sending a first requirement, where
the first requirement is an uplink congestion monitoring requirement corresponding to the first QoS flow, and/or, the first requirement is configured for requiring one or more of the following:
monitoring and/or reporting an uplink congestion status of a second object;
reporting the uplink congestion status of the second object through signaling corresponding to a third object and/or a data packet in the third object; and
using a congestion status of the second object as a congestion status of the third object;
the first object includes one or more of the following:
the first QoS flow;
the first radio bearer;
a first logical channel;
a first logical channel group;
a first cell; and
the first communication device or a first radio access network RAN network element;
the second object includes one or more of the following:
the first QoS flow;
the first radio bearer;
the first logical channel; and
the first logical channel group; and
the third object includes one or more of the following:
the first QoS flow;
the first radio bearer;
the first logical channel; and
the first logical channel group.

Optionally, the congestion monitoring requirement corresponding to the first QoS flow is configured for requiring one or more of the following:
monitoring and/or reporting a congestion status of the first QoS flow;
monitoring and/or reporting the congestion status of the first object; and
reporting the congestion status of the first object or reporting the congestion status of the first QoS flow through signaling corresponding to the first QoS flow and/or a data packet in the first QoS flow;
   and/or
a parameter in the congestion monitoring requirement corresponding to the first QoS flow includes one or more of the following:
information configured for indicating that uplink and/or downlink congestion monitoring requires to be performed, a reporting event, a reporting frequency, and information configured for describing a congestion level.

Optionally, the uplink congestion monitoring requirement corresponding to the first QoS flow is configured for requiring one or more of the following:
monitoring and/or reporting an uplink congestion status of the first QoS flow;
monitoring and/or reporting the uplink congestion status of the second object;
using the congestion status of the second object as a congestion status of the third object; and
reporting the congestion status of the second object or the congestion status of the third object through the signaling corresponding to the third object and/or the data packet in the third object;
   and/or
a parameter in the uplink congestion monitoring requirement corresponding to the first QoS flow or the first requirement includes one or more of the following:
information configured for indicating that uplink congestion monitoring requires to be performed, a reporting event, a reporting frequency, and information configured for describing a congestion level.

Optionally, when using the congestion status of the first object as a congestion status of the first QoS flow, the first execution module is specifically configured to perform at least one of the following:
determining, in a case that a congestion occurs in the first object, that a congestion occurs in the first QoS flow;
determining, in a case that the congestion in the first object ends, that the congestion in the first QoS flow ends;
determining, in a case that the congestion in the first object escalates, that the congestion in the first QoS flow escalates;
determining, in a case that the congestion in the first object de-escalates, that the congestion in the first QoS flow de-escalates; and
using congestion status information of the first object as congestion status information of the first QoS flow;
   and/or
the using the congestion status of the second object as a congestion status of the third object includes at least one of the following:
determining, in a case that a congestion occurs in the second object, that a congestion occurs in the third object;
determining, in a case that the congestion in the second object ends, that the congestion in the third object ends;
determining, in a case that the congestion in the second object escalates, that the congestion in the third object escalates;
determining, in a case that the congestion in the second object de-escalates, that the congestion in the third object de-escalates; and
using congestion status information of the second object as congestion status information of the third object.

Optionally, when sending the first requirement, the first execution module is specifically configured to:
send the first requirement in a case that a first condition is met, where
the first condition includes at least one of the following:
the congestion monitoring requirement corresponding to the first QoS flow includes the uplink congestion monitoring requirement corresponding to the first QoS flow; and
the first object includes at least one of the following: the first QoS flow, the first radio bearer, the first logical channel, and the first logical channel group.

Optionally, when reporting the congestion status of the first object or reporting the congestion status of the first QoS flow through the signaling corresponding to the first QoS flow, the first execution module is specifically configured to:
send uplink and/or downlink congestion status information of the first object or uplink and/or downlink congestion status information of the first QoS flow through an information element and/or a first interface message corresponding to the first QoS flow;
   or
the reporting the congestion status of the first object or reporting the congestion status of the first QoS flow through a data packet in the first QoS flow includes at least one of the following:
   making a packet header of the data packet in the first QoS flow carry the congestion status information of the first object or the congestion status information of the first QoS flow; and
   sending the data packet in the first QoS flow to a second interface,
   where
   a first interface is a control plane interface between a core network and an access network; and
   the second interface is a user plane interface between the core network and the access network.

Optionally, when making the packet header of the data packet in the first QoS flow carry the congestion status information of the first object or the congestion status information of the first QoS flow, the first execution module is specifically configured to perform at least one of the following:
making a packet header of an uplink data packet in the first QoS flow carry congestion status information, where the congestion status information is information describing an uplink congestion status of the first object or an uplink congestion status of the first QoS flow;
making a packet header of a downlink data packet in the first QoS flow carry congestion status information, where the congestion status information is information describing a downlink congestion status of the first object or a downlink congestion status of the first QoS flow;
making the packet header of the uplink data packet in the first QoS flow carry uplink congestion status information, where the uplink congestion status information is the information describing the uplink congestion status of the first object or the uplink congestion status of the first QoS flow; and
making the packet header of the uplink data packet in the first QoS flow carry downlink congestion status information, where the downlink congestion status information is the information describing the downlink congestion status of the first object or the downlink congestion status of the first QoS flow.

Optionally, the first radio bearer includes: a radio bearer to which the first QoS flow is mapped;
and/or
the first radio bearer and the first QoS flow have a one-to-one mapping, or QoS flows mapped to the first radio bearer all have congestion monitoring requirements;
the first logical channel includes: a logical channel corresponding to the first radio bearer, and/or, a logical channel to which the first QoS flow is mapped;
   and/or
the first logical channel group includes: a logical channel group to which the first logical channel belongs;
   and/or
the first cell includes: a cell carrying data of the first QoS flow;
   and/or
the first RAN network element includes: a RAN network element that allocates a radio resource to the first QoS flow.

Optionally, when monitoring the congestion status of the first object, the first execution module is specifically configured to perform one or more of the following:
monitoring downlink congestion statuses of one or more of the first QoS flow, the first radio bearer, the first logical channel, and the first logical channel group;
monitoring uplink congestion statuses of one or more of the first QoS flow, the first radio bearer, the first logical channel, and the first logical channel group, or requiring a second communication device to monitor the uplink congestion statuses of one or more of the first QoS flow, the first radio bearer, the first logical channel, and the first logical channel group; and
monitoring uplink and/or downlink congestion statuses in the first cell and/or the first communication device.

Optionally, the communication device further includes:
a fourth acquisition module, configured to: after sending the first requirement, acquire, by the first communication device, related information of the uplink congestion status of the second object.

Optionally, the congestion status includes one or more of the following:
a congestion starts or a congestion occurs;
a congestion ends or no congestion occurs; and
a congestion level;
   and/or
an uplink congestion status includes one or more of the following:
an uplink congestion starts or an uplink congestion occurs;
an uplink congestion ends or no uplink congestion occurs; and
a congestion level or an uplink congestion level;
   and/or
a downlink congestion status includes one or more of the following:
a downlink congestion starts or a downlink congestion occurs;
a downlink congestion ends or no downlink congestion occurs; and
a congestion level or an uplink congestion level;
   and/or
the congestion status information, downlink congestion status information, and/or uplink congestion status information includes one or more of the following:
first information, configured for indicating that a congestion starts or a congestion occurs;
second information, configured for indicating that a congestion ends or no congestion occurs; and
third information, configured for indicating a congestion level;
   and/or
the uplink congestion status information includes one or more of the following:
fourth information, configured for indicating that an uplink congestion starts or an uplink congestion occurs;
fifth information, configured for indicating that an uplink congestion ends or no uplink congestion occurs; and
sixth information, configured for indicating a congestion level or an uplink congestion level;
   and/or
the downlink congestion status information includes one or more of the following:
seventh information, configured for indicating that a downlink congestion starts or a downlink congestion occurs;
eighth information, configured for indicating that a downlink congestion ends or no downlink congestion occurs; and
ninth information, configured for indicating a congestion level or a downlink congestion level.

Optionally, when reporting the congestion status of the first object or reporting the congestion status of the first QoS flow, the first execution module is specifically configured to perform one or more of the following:
sending first congestion status information in a case that a congestion occurs in the first object;
sending second congestion status information in a case that the congestion in the first object ends;
sending third congestion status information in a case that a congestion level of the first object changes;
sending the first congestion status information or fourth congestion status information in a case that an uplink congestion occurs in the first object;
sending the second congestion status information or fifth congestion status information in a case that the uplink congestion in the first object ends;
sending the third congestion status information or sixth congestion status information in a case that an uplink congestion level of the first object changes;
sending the first congestion status information or seventh congestion status information in a case that the downlink congestion occurs in the first object;
sending the second congestion status information or reporting eighth congestion status information in a case that the downlink congestion in the first object ends; and
sending the third congestion status information or ninth congestion status information in a case that a downlink congestion level of the first object changes;
where
the first congestion status information includes first information and/or third information;
the second congestion status information includes second information;
the third congestion status information includes the third information;
the fourth congestion status information includes fourth information and/or sixth information;
the fifth congestion status information includes fifth information; and
the sixth congestion status information includes the sixth information;
the seventh congestion status information includes seventh information and/or ninth information;
the eighth congestion status information includes eighth information; and
the ninth congestion status information includes the ninth information.

Optionally, that a congestion starts or a congestion occurs includes at least one of the following: QoS cannot be met, a data sending rate is less than a data receiving rate of an N^{th} object, time domain resources are insufficient, a buffer overflows, and a queue overflows;
and/or
that a congestion starts or a congestion occurs in the first QoS flow includes at least one of the following: QoS of the first QoS flow cannot be met, a data sending rate of the first QoS flow is less than a data receiving rate of the first QoS flow, time domain resources of the first QoS flow are insufficient, a buffer for the first QoS flow overflows, and a queue of the first QoS flow overflows;
   and/or
that a congestion starts or a congestion occurs in the N^{th} object includes at least one of the following: QoS of the N^{th} object cannot be met, a data sending rate of the N^{th} object is less than the data receiving rate of the N^{th} object, time domain resources of the N^{th} object are insufficient, a buffer for the N^{th} object overflows, and a queue of the N^{th} object overflows, where
the N^{th} object is any one of the following: the first object, the second object, and the third object.

Optionally, the congestion status of the first object includes at least one of the following:
a congestion status of data in the first object at a Uu interface; and
a congestion status of the data in the first object at a third interface;
   and/or
a downlink congestion status of the first object includes at least one of the following:
   a congestion status of data that is in the first object and that reaches the first communication device before being sent to the Uu interface;
   an uplink congestion status of the first object includes at least one of the following:
   a congestion status of the data that is in the first object and that reaches the first communication device before being sent to the third interface; and
   a congestion status of data that is in the first object and that reaches a terminal before being sent to the Uu interface,
   where
   the Uu interface is an interface between the terminal and a radio access network; and
   the third interface is interfaces between the terminal and the radio access network and between the radio access network and a core network.

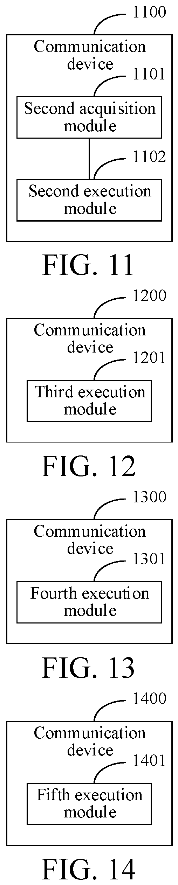

Referring to FIG. 11, embodiments of this application provide a communication device 1100. The apparatus may be used in the foregoing second communication device. The apparatus includes:
a second acquisition module 1101, configured to acquire a first requirement; and
a second execution module 1102, configured to perform a second operation according to the first requirement, where
the first requirement is an uplink congestion monitoring requirement corresponding to a first QoS flow, and/or, the first requirement is configured for requiring one or more of the following:
   monitoring and/or reporting an uplink congestion status of a second object;
   using a congestion status of the second object as a congestion status of a third object; and
   reporting the uplink congestion status of the second object or reporting the congestion status of the third object through signaling corresponding to the third object and/or a data packet in the third object;
   the second operation includes one or more of the following:
      monitoring the uplink congestion status of the second object;
      using the uplink congestion status of the second object as an uplink congestion status of the third object; and
      reporting the uplink congestion status of the second object or reporting the uplink congestion status of the third object through the signaling corresponding to the third object and/or the data packet in the third object;
      the second object includes one or more of the following:
         the first QoS flow;
         a first radio bearer;
         a first logical channel; and
         a first logical channel group; and
         the third object includes one or more of the following:
            the first QoS flow;
            the first radio bearer;
            the first logical channel; and
            the first logical channel group.

Optionally, when using the congestion status of the second object as the congestion status of the third object, the second execution module is specifically configured to perform at least one of the following:
determining, in a case that a congestion occurs in the second object, that a congestion occurs in the third object;
determining, in a case that the congestion in the second object ends, that the congestion in the third object ends;
determining, in a case that the congestion in the second object escalates, that the congestion in the third object escalates;
determining, in a case that the congestion in the second object de-escalates, that the congestion in the third object de-escalates; and
using congestion status information of the second object as congestion status information of the third object.
   and/or
the using the uplink congestion status of the second object as the uplink congestion status of the third object includes at least one of the following:
determining, in a case that an uplink congestion occurs in the second object, that an uplink congestion occurs in the third object;
determining, in a case that the uplink congestion in the second object ends, that the uplink congestion in the third object ends;
determining, in a case that the uplink congestion in the second object escalates, that the uplink congestion in the third object escalates;
determining, in a case that the uplink congestion in the second object de-escalates, that the uplink congestion in the third object de-escalates; and
using uplink congestion status information of the second object as uplink congestion status information of the third object.

Optionally, when reporting the uplink congestion status of the second object or reporting the uplink congestion status of the third object through the signaling corresponding to the third object, the second execution module is specifically configured to:
send one of the following through an information element and/or a Uu interface message corresponding to the third object: congestion status information of the second object, congestion status information of the third object, uplink congestion status information of the second object, and uplink congestion status information of the third object;
   or
the reporting the uplink congestion status of the second object or reporting the uplink congestion status of the third object through the data packet in the third object includes at least one of the following:
   making a packet header of an uplink data packet in the third object carry congestion status information;
   making a packet header of the data packet in the third object carry uplink congestion status information; and
   sending the data packet in the third object to a Uu interface, where
   the congestion status information or the uplink congestion status information is information describing the uplink congestion status of the second object or the uplink congestion status of the third object; and
   the Uu interface is an interface between a terminal and a radio access network.

Optionally, the first radio bearer includes: a radio bearer to which the first QoS flow is mapped;
and/or
the first radio bearer and the first QoS flow have a one-to-one mapping, or QoS flows mapped to the first radio bearer all have congestion monitoring requirements;
the first logical channel includes: a logical channel corresponding to the first radio bearer, and/or, a logical channel to which the first QoS flow is mapped;
   and/or
the first logical channel group includes: a logical channel group to which the first logical channel belongs.

Optionally, an uplink congestion status includes one or more of the following:
an uplink congestion starts or an uplink congestion occurs;
an uplink congestion ends or no uplink congestion occurs; and
a congestion level or an uplink congestion level;
the congestion status information and/or the uplink congestion status information includes one or more of the following:
   first information, configured for indicating that a congestion starts;
   second information, configured for indicating that a congestion ends; and
   third information, configured for indicating a congestion level;
      and/or
   the uplink congestion status information includes one or more of the following:
      fourth information, configured for indicating that an uplink congestion starts or an uplink congestion occurs;
      fifth information, configured for indicating that an uplink congestion ends or no uplink congestion occurs; and
      sixth information, configured for indicating a congestion level or an uplink congestion level.

Optionally, when reporting the uplink congestion status of the second object or reporting the uplink congestion status of the third object, the second execution module is specifically configured to one or more of the following:
sending first congestion status information in a case that a congestion occurs in the second object;
sending second congestion status information in a case that the congestion in the second object ends;
sending third congestion status information in a case that a congestion level of the second object changes;
sending the first congestion status information or fourth congestion status information in a case that an uplink congestion occurs in the second object;
sending the second congestion status information or fifth congestion status information in a case that the uplink congestion in the second object ends; and
reporting the third congestion status information or sixth congestion status information in a case that an uplink congestion level of the second object changes;
where
the first congestion status information includes first information and/or third information;
the second congestion status information includes second information;
the third congestion status information includes the third information;
the fourth congestion status information includes fourth information and/or sixth information;
the fifth congestion status information includes fifth information; and
the sixth congestion status information includes the sixth information.

Optionally, that a congestion starts or a congestion occurs includes at least one of the following: QoS cannot be met, a data sending rate is less than a data receiving rate of an N^{th} object, time domain resources are insufficient, a buffer overflows, and a queue overflows;
and/or
that a congestion starts or a congestion occurs in the N^{th} object includes at least one of the following: QoS of the N^{th} object cannot be met, a data sending rate of the N^{th} object is less than the data receiving rate of the N^{th} object, time domain resources of the N^{th} object are insufficient, a buffer for the N^{th} object overflows, and a queue of the N^{th} object overflows, where
the N^{th} object is any one of the following: a first object, the second object, and the third object.

Referring to FIG. 12, embodiments of this application provide a communication device 1200. The apparatus may be used in the foregoing third communication device. The apparatus includes:
a third execution module 1201, configured to perform a third operation, where
the third operation includes one or more of the following:
   mapping each QoS flow having a congestion monitoring requirement to an independent fourth object;
   determining, based on whether a QoS flow has a congestion monitoring requirement, to map the QoS flow to a same fourth object or different fourth objects;
   mapping one or more QoS flows having a congestion monitoring requirement to a same fourth object;
   mapping one or more QoS flows having a congestion monitoring requirement to a target fourth object, where a QoS flow having no congestion monitoring requirement does not exist in the target fourth object;
   determining and/or saving a congestion monitoring requirement of a fourth object, where the congestion monitoring requirement of the fourth object meets congestion monitoring requirements of all QoS flows mapped to the fourth object, or, is the same as congestion monitoring requirements of all QoS flows mapped to the fourth object; and
   using a congestion status of the fourth object to which the QoS flow is mapped as a congestion status of the QoS flow; and
   the fourth object includes one or more of the following:
      a radio bearer; and
      a logical channel.

Optionally, when determining, based on whether a QoS flow has a congestion monitoring requirement, to map the QoS flow to a same fourth object or different fourth objects, the third execution module is specifically configured to perform any one of the following:
mapping a QoS flow having a congestion monitoring requirement and a QoS flow having no congestion monitoring requirement to different fourth objects; and
mapping, in a case that a second condition is met, a plurality of QoS flows to a same fourth object, where the second condition includes at least one of the following: the plurality of QoS flows all have congestion monitoring requirements, and the congestion monitoring requirements of the plurality of QoS flows are the same or compatible.

Optionally, the communication device further includes:
a fifth acquisition module, configured to: before the third communication device performs the third operation, acquire, by the third communication device, a congestion monitoring requirement corresponding to the QoS flow, where
the third communication device performs the third operation according to the congestion monitoring requirement corresponding to the QoS flow.

Optionally, that the QoS flow has the congestion monitoring requirement includes: acquiring the congestion monitoring requirement corresponding to the QoS flow;
and/or
the congestion monitoring requirement corresponding to the QoS flow is configured for requiring one or more of the following:
monitoring and/or reporting the congestion status of the QoS flow;
monitoring and/or reporting the congestion status of the fourth object to which the QoS flow is mapped;
using the congestion status of the fourth object to which the QoS flow is mapped as the congestion status of the QoS flow; and
reporting the congestion status of the fourth object or reporting the congestion status of the QoS flow through signaling corresponding to the QoS flow and/or a data packet in the QoS flow;
   and/or
a parameter in the congestion monitoring requirement corresponding to the QoS flow includes one or more of the following:
   information configured for indicating that uplink and/or downlink congestion monitoring requires to be performed, a reporting event, a reporting frequency, and information configured for describing a congestion level.

Referring to FIG. 13, embodiments of this application provide a communication device 1300. The apparatus may be used in the foregoing fourth communication device. The apparatus includes:
a fourth execution module 1301, configured to perform a fourth operation, where the fourth operation includes one or more of the following:
mapping each service data flow having a congestion monitoring requirement to an independent QoS flow;
determining, based on whether a service data flow has a congestion monitoring requirement, to map the service data flow to a same QoS flow or different QoS flows;
mapping one or more service data flows having a congestion monitoring requirement to a same QoS flow;
mapping one or more service data flows having a congestion monitoring requirement to a target QoS flow, where a service data flow having no congestion monitoring requirement does not exist in the target QoS flow;
determining and/or saving a congestion monitoring requirement corresponding to the QoS flow, where the congestion monitoring requirement corresponding to the QoS flow meets congestion monitoring requirements of all service flows to which the QoS flow is mapped, or, is the same as congestion monitoring requirements of all service data flows to which the QoS flow is mapped;
using a congestion status of the QoS flow to which the service data flow is mapped as a congestion status of the service data flow; and
sending the congestion monitoring requirement corresponding to the QoS flow.

Optionally, before the determining, based on whether a service data flow has a congestion monitoring requirement, to map the service data flow to a same QoS flow or different QoS flows, the fourth execution module is specifically configured to perform any one of the following:
mapping a service data flow having a congestion monitoring requirement and a service data flow having no congestion monitoring requirement to different QoS flows; and
mapping, in a case that a third condition is met, a plurality of service data flows to a same QoS flow, where the third condition includes at least one of the following: the plurality of service data flows all have congestion monitoring requirements, and the congestion monitoring requirements of the plurality of service data flows are the same or compatible.

Optionally, the communication device further includes:
a sixth acquisition module, configured to: before the fourth communication device performs the fourth operation, acquire, by the fourth communication device, a congestion monitoring requirement corresponding to the service data flow, where
the fourth communication device performs the fourth operation according to the congestion monitoring requirement corresponding to the service data flow.

Optionally, that the service data flow has the congestion monitoring requirement includes: acquiring the congestion monitoring requirement corresponding to the service data flow;
and/or
the congestion monitoring requirement corresponding to the service data flow is configured for requiring one or more of the following:
monitoring and/or reporting the congestion status of the service data;
monitoring and/or reporting the congestion status of the QoS flow to which the service data is mapped; and
reporting the congestion status of the QoS flow or reporting the congestion status of the service data flow through signaling corresponding to the service data flow and/or a data packet in the service data flow;
   and/or
the congestion monitoring requirement corresponding to the QoS flow is configured for requiring one or more of the following:
   monitoring and/or reporting the congestion status of the QoS flow;
   monitoring and/or reporting the congestion status of a fourth object to which the QoS flow is mapped; and
   reporting the congestion status of the fourth object or the congestion status of the QoS flow through signaling corresponding to the QoS flow and/or a data packet in the QoS flow;
      and/or
   a parameter in the congestion monitoring requirement corresponding to the service data flow, or, a parameter in the congestion monitoring requirement corresponding to the QoS flow includes one or more of the following:
      information configured for indicating that uplink and/or downlink congestion monitoring requires to be performed, a reporting event, a reporting frequency, and information configured for describing a congestion level.

Referring to FIG. 14, embodiments of this application provide a communication device 1400. The apparatus may be used in the foregoing fifth communication device. The apparatus includes:
a fifth execution module 1401, configured to perform a fifth operation, where
the fifth operation includes at least one of the following:
   determining a congestion monitoring requirement corresponding to a first QoS flow;
   sending the congestion monitoring requirement corresponding to the first QoS flow;
   determining a first requirement; and
   sending the first requirement, where
   the first requirement is an uplink congestion monitoring requirement corresponding to the first QoS flow, and/or, the first requirement is configured for requiring one or more of the following:
      monitoring and/or reporting an uplink congestion status of a second object;
      reporting the uplink congestion status of the second object through signaling corresponding to a third object and/or a data packet in the third object; and
      using a congestion status of the second object as a congestion status of the third object;
      the second object includes one or more of the following:
         the first QoS flow;
         a first radio bearer;
         a first logical channel; and
         a first logical channel group; and
         the third object includes one or more of the following:
            the first QoS flow;
            the first radio bearer;
            the first logical channel; and
            the first logical channel group.

Optionally, the congestion monitoring requirement corresponding to the first QoS flow is configured for requiring one or more of the following:
monitoring and/or reporting a congestion status of the first QoS flow;
monitoring and/or reporting a congestion status of a first object; and
reporting the congestion status of the first object or reporting the congestion status of the first QoS flow through signaling corresponding to the first QoS flow and/or a data packet in the first QoS flow;
   and/or
a parameter in the congestion monitoring requirement corresponding to the first QoS flow includes one or more of the following:
   information configured for indicating that uplink and/or downlink congestion monitoring requires to be performed, a reporting event, a reporting frequency, and information configured for describing a congestion level.

Optionally, the first object includes one or more of the following:
the first QoS flow;
the first radio bearer;
the first logical channel;
the first logical channel group;
a first cell; and
a first communication device or a first RAN network element.

Optionally, the step of performing the fifth operation by the fifth execution module includes: acquiring a congestion monitoring requirement corresponding to a first service data flow, and performing the fifth operation according to the congestion monitoring requirement corresponding to the first service data flow, where
the first service data flow is a service data flow to which the first QoS flow is mapped.

Optionally, the congestion monitoring requirement corresponding to the first service data flow is configured for requiring one or more of the following:
monitoring and/or reporting a congestion status of the first service data;
monitoring and/or reporting the congestion status of the first QoS flow; and
reporting the congestion status of the first QoS flow or reporting the congestion status of the first service data flow through signaling corresponding to the first service data flow and/or a data packet in the service data flow.

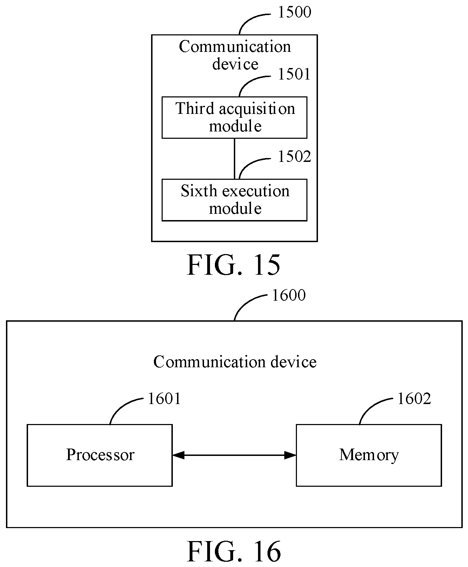

Referring to FIG. 15, embodiments of this application provide a communication device 1500. The apparatus may be used in the foregoing sixth communication device. The apparatus includes:
a third acquisition module 1501, configured to acquire congestion status information of a first QoS flow; and
a sixth execution module 1502, configured to perform a sixth operation based on the congestion status information of the first QoS flow, where
the sixth operation includes at least one of the following:
   determining a congestion status of a first service data flow; and
   sending congestion status information of the first service data flow, where
   the first service data flow is a service data flow to which the first QoS flow is mapped.

Optionally, when the sixth communication device determines the congestion status of the first service data flow based on the congestion status information of the first QoS flow, the sixth execution module is specifically configured to perform at least one of the following:
determining, in a case that a congestion occurs in the first QoS flow, that a congestion occurs in the first service data flow;
determining, in a case that the congestion in the first QoS flow ends, that the congestion in the first service data flow ends;
determining, in a case that the congestion in the first QoS flow escalates, that the congestion in the first service data flow escalates;
determining, in a case that the congestion in the first QoS flow de-escalates, that the congestion in the first service data flow de-escalates; and
using the congestion status information of the first QoS flow as the congestion status information of the first service data flow.

Optionally, the sixth execution module is specifically configured to:
determine, in a case that a congestion occurs in the first QoS flow, that a congestion occurs in the first service data flow, including at least one of the following: determining, in a case that an uplink congestion occurs in the first QoS flow, that an uplink congestion occurs in the first service data flow; and determining, in a case that a downlink congestion occurs in the first QoS flow, that a downlink congestion occurs in the first service data flow;
determine, in a case that the congestion in the first QoS flow ends, that the congestion in the first service data flow ends, including at least one of the following: determining, in a case that the uplink congestion in the first QoS flow ends, that the uplink congestion in the first service data flow ends; and determining, in a case that the downlink congestion in the first QoS flow ends, that the downlink congestion in the first service data flow ends;
determine, in a case that the congestion in the first QoS flow escalates, that the congestion in the first service data flow escalates, including at least one of the following: determining, in a case that the uplink congestion in the first QoS flow escalates, that the uplink congestion in the first service data flow escalates; and determining, in a case that the downlink congestion in the first QoS flow escalates, that the downlink congestion in the first service data flow escalates;
determine, in a case that the congestion in the first QoS flow de-escalates, that the congestion in the first service data flow de-escalates, including at least one of the following: determining, in a case that the uplink congestion in the first QoS flow de-escalates, that the uplink congestion in the first service data flow de-escalates; and determining, in a case that the downlink congestion in the first QoS flow de-escalates, that the downlink congestion in the first service data flow de-escalates; and
use the congestion status information of the first QoS flow as the congestion status information of the first service data flow, including at least one of the following: using uplink congestion status information of the first QoS flow as uplink congestion status information of the first service data flow; and using downlink congestion status information of the first QoS flow as downlink congestion status information of the first service data flow.

Optionally, the congestion status includes one or more of the following:
a congestion starts or a congestion occurs;
a congestion ends or no congestion occurs; and
a congestion level;
   and/or
an uplink congestion status includes one or more of the following:
   an uplink congestion starts or an uplink congestion occurs;
   an uplink congestion ends or no uplink congestion occurs; and
   a congestion level or an uplink congestion level;
      and/or
   a downlink congestion status includes one or more of the following:
   a downlink congestion starts or a downlink congestion occurs;
   a downlink congestion ends or no downlink congestion occurs; and
   a congestion level or an uplink congestion level;
      and/or
   the congestion status information, downlink congestion status information, and/or uplink congestion status information includes one or more of the following:
      first information, configured for indicating that a congestion starts or a congestion occurs;
      second information, configured for indicating that a congestion ends or no congestion occurs; and
      third information, configured for indicating a congestion level;
         and/or
      the uplink congestion status information includes one or more of the following:
         fourth information, configured for indicating that an uplink congestion starts or an uplink congestion occurs;
         fifth information, configured for indicating that an uplink congestion ends or no uplink congestion occurs; and
         sixth information, configured for indicating a congestion level or an uplink congestion level;
            and/or
         the downlink congestion status information includes one or more of the following:
            seventh information, configured for indicating that a downlink congestion starts or a downlink congestion occurs;
            eighth information, configured for indicating that a downlink congestion ends or no downlink congestion occurs; and
            ninth information, configured for indicating a congestion level or a downlink congestion level.

Optionally, the sixth execution module is specifically configured to perform at least one of the following:
determining, in a case that a fourth condition is met, that an uplink congestion occurs in the first QoS flow, where
the fourth condition includes: an uplink data packet in the first QoS flow carries the first information and/or the third information, and the fourth information or the sixth information is received;
determining, in a case that a fifth condition is met, that a downlink congestion occurs in the first QoS flow, where
the fifth condition includes: a downlink data packet in the first QoS flow carries the first information and/or the third information, the uplink data packet in the first QoS flow carries the seventh information and/or the ninth information, and the seventh information and/or the ninth information is received through signaling;
determining, in a case that a sixth condition is met, that the uplink congestion in the first service data flow ends, where
the sixth condition includes: the uplink data packet in the first QoS flow carries the second information, and the fifth information is received;
determining, in a case that a seventh condition is met, that the downlink congestion in the first QoS flow ends, where
the seventh condition includes: the downlink data packet in the first QoS flow carries the second information, the uplink data packet in the first QoS flow carries the eighth information, and the eighth information is received through signaling;
determining, in a case that an eighth condition is met, that the uplink congestion in the first service data flow escalates, where
the eighth condition includes: the uplink data packet in the first QoS flow carries the first information and/or the third information, and the fourth information or the sixth information is received;
determining, in a case that a ninth condition is met, that the downlink congestion in the first QoS flow escalates, where
the ninth condition includes: the downlink data packet in the first QoS flow carries the first information and/or the third information, the uplink data packet in the first QoS flow carries the seventh information and/or the ninth information, and the seventh information and/or the ninth information is received through signaling;
determining, in a case that a tenth condition is met, that the uplink congestion in the first service data flow de-escalates, where
the tenth condition includes: the uplink data packet in the first QoS flow carries the first information and/or the third information, and the fourth information or the sixth information is received;
determining, in a case that an eleventh condition is met, that the downlink congestion in the first QoS flow de-escalates, where
the eleventh condition includes: the downlink data packet in the first QoS flow carries the first information and/or the third information, the uplink data packet in the first QoS flow carries the seventh information and/or the ninth information, and the seventh information and/or the ninth information is received through signaling;
determining, in a case that a twelfth condition is met, the uplink congestion status information of the first QoS flow, where
the twelfth condition includes: the uplink data packet in the first QoS flow carries the first information, the second information, and/or the third information, and the fourth information, the fifth information, or the sixth information is received; and
determining, in a case that a thirteenth condition is met, the uplink congestion status information of the first QoS flow, where
the thirteenth condition includes: the downlink data packet in the first QoS flow carries the first information, the second information, and/or the third information, the uplink data packet in the first QoS flow carries the seventh information, the eighth information, and/or the ninth information, and the seventh information, the eighth information, and/or the ninth information is received through signaling.

Optionally, when the sixth communication device acquires the congestion status information of the first QoS flow, the third acquisition module is specifically configured to:
acquire, by the sixth communication device, congestion status information of a first object or the congestion status information of the first QoS flow through signaling corresponding to the first QoS flow and/or a data packet in the first QoS flow, where
the first object includes one or more of the following:
   a first radio bearer;
   a first logical channel;
   a first logical channel group;
   a first cell; and
   a first communication device or a first RAN network element.

Optionally, when the sixth communication device acquires the congestion status information of the first object or the congestion status information of the first QoS flow through the signaling corresponding to the first QoS flow, the third acquisition module is specifically configured to:
acquire, by the sixth communication device, the congestion status information of the first object or the congestion status information of the first QoS flow through an information element corresponding to the first QoS flow and/or a first interface message, where
   or
the acquiring, by the sixth communication device, the congestion status information of the first object or the congestion status information of the first QoS flow through the data packet in the first QoS flow includes:
   acquiring, by the sixth communication device, the congestion status information of the first object or the congestion status information of the first QoS flow through the congestion status information of the first object carried in a packet header of the data packet in the first QoS flow,
   where
   a first interface is a control plane interface between a core network and an access network; and
   a second interface is a user plane interface between the core network and the access network.

Optionally, when acquiring the congestion status information of the first object or the congestion status information of the first QoS flow through the congestion status information of the first object carried in the packet header of the data packet in the first QoS flow, the third acquisition module is specifically configured to:
acquire congestion status information through a packet header of an uplink data packet in the first QoS flow, where the congestion status information is information describing an uplink congestion status of the first object or an uplink congestion status of the first QoS flow;
acquire congestion status information through a packet header of a downlink data packet in the first QoS flow, where the congestion status information is information describing a downlink congestion status of the first object or a downlink congestion status of the first QoS flow;
acquire uplink congestion status information through the packet header of the uplink data packet in the first QoS flow, where the uplink congestion status information is the information describing the uplink congestion status of the first object or the uplink congestion status of the first QoS flow; and
acquire downlink congestion status information through the packet header of the uplink data packet in the first QoS flow, where the downlink congestion status information is the information describing the downlink congestion status of the first object or the downlink congestion status of the first QoS flow.

Optionally, the step of performing, by the sixth communication device, the sixth operation based on the congestion status information of the first QoS flow performed by the sixth execution module includes:
acquiring a congestion monitoring requirement corresponding to the first QoS flow, and/or, a congestion monitoring requirement corresponding to the first service data flow, and
according to the congestion monitoring requirement corresponding to the first QoS flow, and/or, the congestion monitoring requirement corresponding to the first service data flow, performing: performing, by the sixth communication device, the sixth operation based on the congestion status information of the first QoS flow.

Optionally, the congestion monitoring requirement corresponding to the first service data flow is configured for requiring one or more of the following:
monitoring and/or reporting the congestion status of the first service data;
monitoring and/or reporting a congestion status of the first QoS flow; and
reporting the congestion status of the first QoS flow or reporting the congestion status of the first service data flow through signaling corresponding to the first service data flow and/or a data packet in the service data flow.

The communication device in embodiments of this application may be an electronic device, for example, an electronic device with an operating system, or may be a component, for example, an integrated circuit or a chip, in an electronic device. The electronic device may be a terminal, or may be another device other than the terminal. For example, the terminal may include, but not limited to, the types of the terminal 11 listed above. The another device may be a server, a network attached storage (Network Attached Storage, NAS), or the like. This is not specifically limited in embodiments of this application.

The communication device in embodiments of this application can implement various processes implemented in the method embodiments in FIG. 3 to FIG. 9b, and the same technical effects are achieved. To avoid repetition, details are not described herein again.

Optionally, as shown in FIG. 16, embodiments of this application further provide a communication device 1600, including a processor 1601 and a memory 1602. The memory 1602 stores a program or instructions executable on the processor 1601. For example, when the communication device 1600 is a terminal, the program or instructions, when being executed by the processor 1601, implement the various steps of the foregoing embodiments of the method on a terminal side, and can achieve the same technical effects. When the communication device 1600 is a network side device, the program or instructions, when being executed by the processor 1601, implement various steps of the foregoing method embodiments on a network side, and can achieve the same technical effects. To avoid repetition, details are not described herein again.

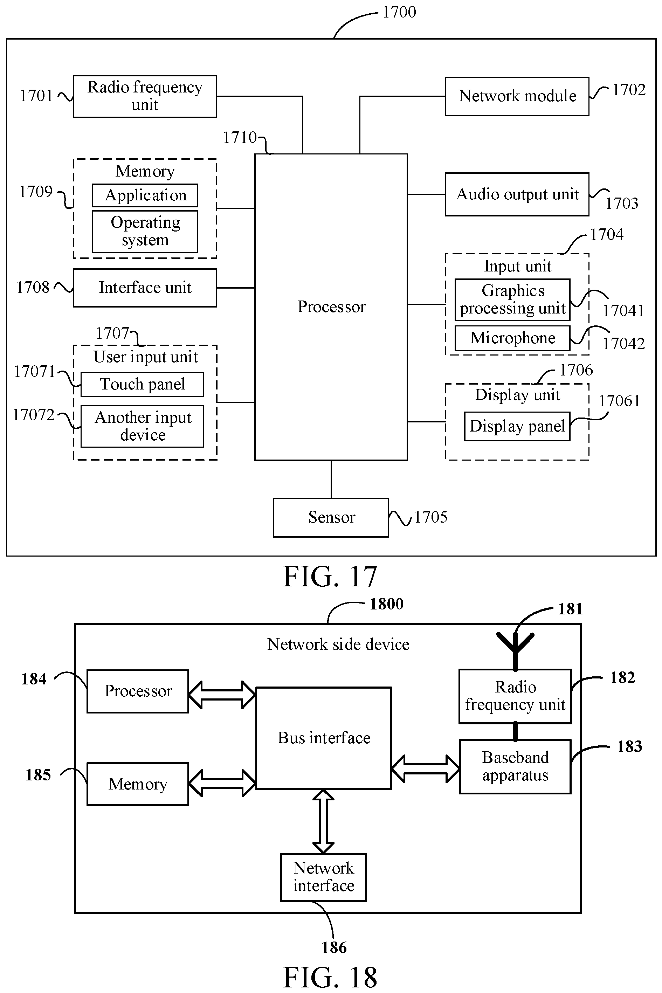

Embodiments of this application further provide a terminal, including a processor and a communication interface. The terminal embodiment corresponds to the embodiments of the foregoing methods involving a terminal side. Various implementation processes and implementations in the foregoing method embodiments are applicable to the terminal embodiment, and can achieve the same technical effects. Specifically, FIG. 17 is a schematic diagram of a hardware structure of a terminal that implements embodiments of this application.

The terminal 1700 includes, but is not limited to, at least some components such as a radio frequency unit 1701, a network module 1702, an audio output unit 1703, an input unit 1704, a sensor 1705, a display unit 1706, a user input unit 1707, an interface unit 1708, a memory 1709, and a processor 1710.

A person skilled in the art may understand that, the terminal 1700 may further include a power supply (for example, a battery) for supplying power to the components. The power supply may be logically connected to the processor 1710 by a power management system, thereby implementing functions such as charging, discharging, and power consumption management through the power management system. The terminal structure shown in FIG. 17 does not constitute a limitation on the terminal, and the terminal may include more or fewer components than shown, or combine some components, or have different component arrangements. Details are not described herein again.

It should be understood that, in embodiments of this application, the input unit 1704 may include a graphics processing unit (Graphics Processing Unit, GPU) 17041 and a microphone 17042. The graphics processing unit 17041 performs processing on image data of a static picture or a video that is obtained by an image acquisition device (for example, a camera) in a video acquisition mode or an image acquisition mode. The display unit 1706 may include a display panel 17061. The display panel 17061 may be configured in the form of a liquid crystal display, an organic light-emitting diode, or the like. The user input unit 1707 includes at least one of a touch panel 17071 and another input device 17072. The touch panel 17071 is also referred to as a touchscreen. The touch panel 17071 may include two parts: a touch detection apparatus and a touch controller. The another input device 17072 may include, but not limited to, a physical keyboard, a functional key (for example, a volume control key or a switch key), a track ball, a mouse, and a joystick, which are not described herein in detail.

In embodiments of this application, after receiving downlink data from the network side device, the radio frequency unit 1701 may transmit the downlink data to the processor 1710 for processing. In addition, the radio frequency unit 1701 may send uplink data to the network side device. Generally, the radio frequency unit 1701 includes, but is not limited to, an antenna, an amplifier, a transceiver, a coupler, a low noise amplifier, a duplexer, and the like.

The memory 1709 may be configured to store a software program or instructions and various data. The memory 1709 may mainly include a first storage area for storing a program or instructions and a second storage area for storing data. The first storage area may store an operating system, an application or instructions required by at least one function (for example, a sound playback function and an image display function), and the like. In addition, the memory 1709 may include a volatile memory or a non-volatile memory, or the memory 1709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1709 in embodiments of this application includes, but is not limited to, these memories and any other suitable types.

The processor 1710 may include one or more processing units. Optionally, the processor 1710 integrates an application processor and a modem processor. The application processor mainly processes operations involving an operating system, a user interface, an application, and the like. The modem processor mainly processes a wireless communication signal, and is, for example, a baseband processor. It may be understood that the modem processor may either not be integrated into the processor 1710.

The processor 1710 is configured to perform the foregoing method involving a terminal side.

Embodiments of this application further provide a network side device. The network side device may be an access network device or a core network device, and includes a processor and a communication interface. The network side device embodiment corresponds to the embodiments of the foregoing method involving a network side device. Various implementation processes and implementations in the foregoing method embodiments are applicable to the network side device embodiment, and can achieve the same technical effects.

Specifically, embodiments of this application further provide a network side device. The network side device is an access network device. As shown in FIG. 18, the network side device 1800 includes an antenna 181, a radio frequency apparatus 182, a baseband apparatus 183, a processor 184, and a memory 185. The antenna 181 is connected to the radio frequency apparatus 182. In an uplink direction, the radio frequency apparatus 182 receives information through the antenna 181, and sends the received information to the baseband apparatus 183 for processing. In a downlink direction, the baseband apparatus 183 processes information to be sent, and sends the processed information to the radio frequency apparatus 182. The radio frequency apparatus 182 processes the received information and sends the processed information through the antenna 181.

The method performed by the network side device in the foregoing embodiments may be implemented in the baseband apparatus 183. The baseband apparatus 183 includes a baseband processor.

The baseband apparatus 183 may include, for example, at least one baseband board. A plurality of chips are disposed on the baseband board, as shown in FIG. 18. One of the chips is, for example, a baseband processor, and is connected to the memory 185 by a bus interface, to call a program in the memory 185 to perform operations of a network device shown in the foregoing method embodiments.

The network side device may further include a network interface 186. The interface is, for example, a common public radio interface (common public radio interface, CPRI).

Specifically, the network side device 1800 in embodiments of this application further includes instructions or a program that are stored in the memory 185 and executable on the processor 184. The processor 184 calls the instructions or program in the memory 185 to perform the methods involving an access network device on a network side, and achieve the same technical effects. To avoid repetition, details are not described herein again.

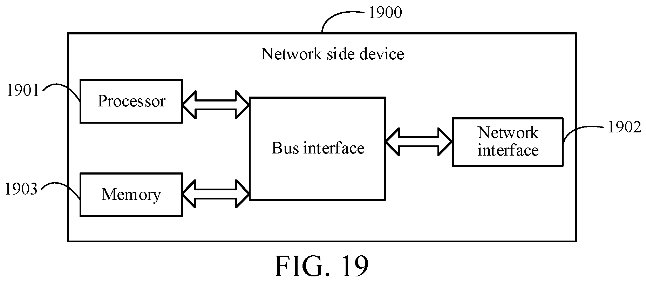

Specifically, embodiments of this application further provide a network side device. The network side device is a core network device. As shown in FIG. 19, the network side device 1900 includes a processor 1901, a network interface 1902, and a memory 1903. The network interface 1902 is, for example, a common public radio interface (common public radio interface, CPRI).

Specifically, the network side device 1900 in embodiments of this application further includes instructions or a program that are stored in the memory 1903 and executable on the processor 1901. The processor 1901 calls the instructions or program in the memory 1903 to perform the foregoing methods involving a core network device on a network side, and achieve the same technical effects. To avoid repetition, details are not described herein again.

Embodiments of this application provide a communication system is provided, and includes: a first communication device, a second communication device, a third communication device, a fourth communication device, a fifth communication device, and a sixth communication device. The first communication device may be configured to perform the steps of the method according to the first aspect. The second communication device may be configured to perform the steps of the method according to the second aspect. The third communication device may be configured to perform the steps of the method according to the third aspect. The fourth communication device may be configured to perform the steps of the method according to the fourth aspect. The fifth communication device may be configured to perform the steps of the method according to the fifth aspect. The sixth communication device may be configured to perform the steps of the method according to the sixth aspect.

Embodiments of this application further provide a readable storage medium. The readable storage medium stores a program or instructions. The program or instructions, when executed by a processor, implement various processes of the embodiments of the foregoing information processing method, and the same technical effects can be achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, an optical disc, or the like.

Embodiments of this application further provide a chip. The chip includes a processor and a communication interface. The communication interface is coupled to the processor. The processor is configured to run a program or instructions, to implement various processes of the foregoing embodiments of the information processing method, and can achieve the same technical effects. To avoid repetition, details are not described herein again.

It should be understood that the chip in embodiments of this application may also be referred to as a system-level chip, a system chip, a chip system, a system-on-a-chip, or the like.

Embodiments of this application further provide a computer program/program product. The computer program/program product is stored in a storage medium. The computer program/program product, when being executed by at least one processor, implements various processes of the foregoing embodiments of the information processing method, and the same technical effects can be achieved. To avoid repetition, details are not described herein again.

Embodiments of this application further provide a communication system, including: a terminal and a network side device. The terminal may be configured to perform the steps of the foregoing method on a terminal side. The network side device may be configured to perform the steps of the foregoing method on a network side.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one ..." does not exclude that there are still other same elements in the processes, methods, objects, or apparatuses. In addition, it needs to be noted that the scope of the methods and apparatuses in the implementations of this application is not limited to performing the functions in the order shown or discussed, but may also include performing the functions in a substantially simultaneous manner or in reverse order based on the features involved. For example, the described methods may be performed in a different order than described, and various steps may be added, omitted, or combined. Further, features described with reference to some examples may be combined in other examples.

Through the descriptions of the foregoing implementations, a person skilled in the art may clearly understand that the methods in the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the related art may be implemented in a form of a computer software product. The computer software product is stored in a storage medium (for example, a ROM/RAM, a magnetic disk, or an optical disc) and includes several instructions for instructing a terminal (which may be a mobile phone, a computer, a server, an air conditioner, a network side device, or the like) to perform the methods described in embodiments of this application.

Embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. An information processing method, comprising at least one of the following:
acquiring, by a first communication device, a congestion monitoring requirement corresponding to a first quality of service QoS flow; and
performing, by the first communication device, a first operation according to the congestion monitoring requirement corresponding to the first QoS flow, wherein
the first operation comprises one or more of the following:
monitoring a congestion status of a first object;
using the congestion status of the first object as a congestion status of the first QoS flow;
reporting the congestion status of the first object or reporting the congestion status of the first QoS flow through signaling corresponding to the first QoS flow and/or a data packet in the first QoS flow;
mapping the first QoS flow to a first radio bearer; and
sending a first requirement, wherein
the first requirement is an uplink congestion monitoring requirement corresponding to the first QoS flow, and/or, the first requirement is configured for requiring one or more of the following:
monitoring and/or reporting an uplink congestion status of a second object;
reporting the uplink congestion status of the second object through signaling corresponding to a third object and/or a data packet in the third object; and
using a congestion status of the second object as a congestion status of the third object, wherein
the first object comprises one or more of the following:
the first QoS flow;
the first radio bearer;
a first logical channel;
a first logical channel group;
a first cell; and
the first communication device or a first radio access network RAN network element;
the second object comprises one or more of the following:
the first QoS flow;
the first radio bearer;
the first logical channel; and
the first logical channel group; and
the third object comprises one or more of the following:
the first QoS flow;
the first radio bearer;
the first logical channel; and
the first logical channel group.

2. The method according to claim 1, wherein the congestion monitoring requirement corresponding to the first QoS flow is configured for requiring one or more of the following:
monitoring and/or reporting the congestion status of the first QoS flow;
monitoring and/or reporting the congestion status of the first object; and
reporting the congestion status of the first object or reporting the congestion status of the first QoS flow through the signaling corresponding to the first QoS flow and/or the data packet in the first QoS flow;
and/or
a parameter in the congestion monitoring requirement corresponding to the first QoS flow comprises one or more of the following:
information configured for indicating that uplink and/or downlink congestion monitoring requires to be performed, a reporting event, a reporting frequency, and information configured for describing a congestion level.

3. The method according to claim 1, wherein the uplink congestion monitoring requirement corresponding to the first QoS flow is configured for requiring one or more of the following:
monitoring and/or reporting an uplink congestion status of the first QoS flow;
monitoring and/or reporting the uplink congestion status of the second object;
using the congestion status of the second object as the congestion status of the third object, wherein
reporting the congestion status of the second object or the congestion status of the third object through the signaling corresponding to the third object and/or the data packet in the third object;
and/or
a parameter in the uplink congestion monitoring requirement corresponding to the first QoS flow or the first requirement comprises one or more of the following:
information configured for indicating that uplink congestion monitoring requires to be performed, a reporting event, a reporting frequency, and information configured for describing a congestion level.

4. The method according to claim 1 or 3, wherein the using the congestion status of the first object as a congestion status of the first QoS flow comprises at least one of the following:
determining, in a case that a congestion occurs in the first object, that a congestion occurs in the first QoS flow;
determining, in a case that the congestion in the first object ends, that the congestion in the first QoS flow ends;
determining, in a case that the congestion in the first object escalates, that the congestion in the first QoS flow escalates;
determining, in a case that the congestion in the first object de-escalates, that the congestion in the first QoS flow de-escalates; and
using congestion status information of the first object as congestion status information of the first QoS flow;
and/or
the using a congestion status of the second object as a congestion status of the third object comprises at least one of the following:
determining that a congestion occurs in the third object in a case that a congestion occurs in the second object;
determining, in a case that the congestion in the second object ends, that the congestion in the third object ends;
determining, in a case that the congestion in the second object escalates, that the congestion in the third object escalates;
determining, in a case that the congestion in the second object de-escalates, that the congestion in the third object de-escalates; and
using congestion status information of the second object as congestion status information of the third object.

5. The method according to claim 1, wherein the sending a first requirement comprises:
sending the first requirement in a case that a first condition is met, wherein
the first condition comprises at least one of the following:
the congestion monitoring requirement corresponding to the first QoS flow comprises the uplink congestion monitoring requirement corresponding to the first QoS flow; and
the first object comprises at least one of the following: the first QoS flow, the first radio bearer, the first logical channel, and the first logical channel group.

6. The method according to claim 1, wherein the reporting the congestion status of the first object or reporting the congestion status of the first QoS flow through the signaling corresponding to the first QoS flow comprises:
sending uplink and/or downlink congestion status information of the first object or uplink and/or downlink congestion status information of the first QoS flow through an information element and/or a first interface message corresponding to the first QoS flow;
or
the reporting the congestion status of the first object or reporting the congestion status of the first QoS flow through the data packet in the first QoS flow comprises at least one of the following:
making a packet header of the data packet in the first QoS flow carry congestion status information of the first object or congestion status information of the first QoS flow; and
sending the data packet in the first QoS flow to a second interface,
wherein
the first interface is a control plane interface between a core network and an access network; and
the second interface is a user plane interface between the core network and the access network.

7. The method according to claim 6, wherein the making a packet header of the data packet in the first QoS flow carry congestion status information of the first object or congestion status information of the first QoS flow comprises at least one of the following:
making a packet header of an uplink data packet in the first QoS flow carry congestion status information, wherein the congestion status information is information describing an uplink congestion status of the first object or an uplink congestion status of the first QoS flow;
making a packet header of a downlink data packet in the first QoS flow carry congestion status information, wherein the congestion status information is information describing a downlink congestion status of the first object or a downlink congestion status of the first QoS flow;
making the packet header of the uplink data packet in the first QoS flow carry uplink congestion status information, wherein the uplink congestion status information is information describing the uplink congestion status of the first object or the uplink congestion status of the first QoS flow; and
making the packet header of the uplink data packet in the first QoS flow carry downlink congestion status information, wherein the downlink congestion status information is information describing the downlink congestion status of the first object or the downlink congestion status of the first QoS flow.

8. The method according to claim 1, wherein
the first radio bearer comprises: a radio bearer to which the first QoS flow is mapped;
and/or
the first radio bearer and the first QoS flow have a one-to-one mapping, or QoS flows mapped to the first radio bearer all have congestion monitoring requirements;
and/or
the first logical channel comprises: a logical channel corresponding to the first radio bearer, and/or, a logical channel to which the first QoS flow is mapped;
and/or
the first logical channel group comprises: a logical channel group to which the first logical channel belongs;
and/or
the first cell comprises: a cell carrying data of the first QoS flow;
and/or
the first RAN network element comprises: a RAN network element that allocates a radio resource to the first QoS flow.

9. The method according to claim 1, wherein the monitoring a congestion status of the first object comprises one or more of the following:
monitoring downlink congestion statuses of one or more of the first QoS flow, the first radio bearer, the first logical channel, and the first logical channel group;
monitoring uplink congestion statuses of one or more of the first QoS flow, the first radio bearer, the first logical channel, and the first logical channel group, or requiring a second communication device to monitor the uplink congestion statuses of one or more of the first QoS flow, the first radio bearer, the first logical channel, and the first logical channel group; and
monitoring uplink and/or downlink congestion statuses in the first cell and/or the first communication device.

10. The method according to claim 1, wherein after the sending a first requirement, the method further comprises:
acquiring, by the first communication device, related information of the uplink congestion status of the second object.

11. The method according to any one of claims 1 to 10, wherein
the congestion status comprises one or more of the following:
a congestion starts or a congestion occurs;
a congestion ends or no congestion occurs; and
a congestion level;
and/or
the uplink congestion status comprises one or more of the following:
an uplink congestion starts or an uplink congestion occurs;
an uplink congestion ends or no uplink congestion occurs; and
a congestion level or an uplink congestion level;
and/or
the downlink congestion status comprises one or more of the following:
a downlink congestion starts or a downlink congestion occurs;
a downlink congestion ends or no downlink congestion occurs; and
a congestion level or an uplink congestion level;
and/or
the congestion status information, the downlink congestion status information, and/or the uplink congestion status information comprises one or more of the following:
first information, configured for indicating that a congestion starts or a congestion occurs;
second information, configured for indicating that a congestion ends or no congestion occurs; and
third information, configured for indicating a congestion level;
and/or
the uplink congestion status information comprises one or more of the following:
fourth information, configured for indicating that an uplink congestion starts or an uplink congestion occurs;
fifth information, configured for indicating that an uplink congestion ends or no uplink congestion occurs; and
sixth information, configured for indicating a congestion level or an uplink congestion level;
and/or
the downlink congestion status information comprises one or more of the following:
seventh information, configured for indicating that a downlink congestion starts or a downlink congestion occurs;
eighth information, configured for indicating that a downlink congestion ends or no downlink congestion occurs; and
ninth information, configured for indicating a congestion level or a downlink congestion level.

12. The method according to claim 1, wherein the reporting the congestion status of the first object or reporting the congestion status of the first QoS flow comprises one or more of the following:
sending first congestion status information in a case that a congestion occurs in the first object;
sending second congestion status information in a case that the congestion in the first object ends;
sending third congestion status information in a case that a congestion level of the first object changes;
sending the first congestion status information or fourth congestion status information in a case that an uplink congestion occurs in the first object;
sending the second congestion status information or fifth congestion status information in a case that the uplink congestion in the first object ends;
sending the third congestion status information or sixth congestion status information in a case that an uplink congestion level of the first object changes;
sending the first congestion status information or seventh congestion status information in a case that the downlink congestion occurs in the first object;
sending the second congestion status information or reporting eighth congestion status information in a case that the downlink congestion in the first object ends; and
sending the third congestion status information or ninth congestion status information in a case that a downlink congestion level of the first object changes;
wherein
the first congestion status information comprises first information and/or third information;
the second congestion status information comprises second information;
the third congestion status information comprises the third information;
the fourth congestion status information comprises fourth information and/or sixth information;
the fifth congestion status information comprises fifth information;
the sixth congestion status information comprises the sixth information;
the seventh congestion status information comprises seventh information and/or ninth information;
the eighth congestion status information comprises eighth information; and
the ninth congestion status information comprises the ninth information.

13. The method according to claim 11 or 12, wherein that a congestion starts or a congestion occurs comprises at least one of the following: QoS cannot be met, a data sending rate is less than a data receiving rate of an N^{th} object, time domain resources are insufficient, a buffer overflows, and a queue overflows;
and/or
that a congestion starts or a congestion occurs in the first QoS flow comprises at least one of the following: QoS of the first QoS flow cannot be met, a data sending rate of the first QoS flow is less than a data receiving rate of the first QoS flow, time domain resources of the first QoS flow are insufficient, a buffer for the first QoS flow overflows, and a queue of the first QoS flow overflows;
and/or
that a congestion starts or a congestion occurs in the N^{th} object comprises at least one of the following: QoS of the N^{th} object cannot be met, a data sending rate of the N^{th} object is less than the data receiving rate of the N^{th} object, time domain resources of the N^{th} object are insufficient, a buffer for the N^{th} object overflows, and a queue of the N^{th} object overflows, wherein
the N^{th} object is any one of the following: the first object, the second object, and the third object.

14. The method according to claim 1, wherein
the congestion status of the first object comprises at least one of the following:
a congestion status of data in the first object at a Uu interface; and
a congestion status of the data in the first object at a third interface;
and/or
a downlink congestion status of the first object comprises at least one of the following:
a congestion status of data that is in the first object and that reaches the first communication device before being sent to the Uu interface;
an uplink congestion status of the first object comprises at least one of the following:
a congestion status of the data that is in the first object and that reaches the first communication device before being sent to the third interface; and
a congestion status of data that is in the first object and that reaches a terminal before being sent to the Uu interface,
wherein
the Uu interface is an interface between the terminal and a radio access network; and
the third interface is interfaces between the terminal and the radio access network and between the radio access network and a core network.

15. An information processing method, comprising:
acquiring, by a second communication device, a first requirement; and
performing, by the second communication device, a second operation according to the first requirement, wherein
the first requirement is an uplink congestion monitoring requirement corresponding to a first QoS flow, and/or, the first requirement is configured for requiring one or more of the following:
monitoring and/or reporting an uplink congestion status of a second object;
using a congestion status of the second object as a congestion status of a third object; and
reporting the uplink congestion status of the second object or reporting the congestion status of the third object through signaling corresponding to the third object and/or a data packet in the third object;
the second operation comprises one or more of the following:
monitoring the uplink congestion status of the second object;
using the uplink congestion status of the second object as an uplink congestion status of the third object; and
reporting the uplink congestion status of the second object or reporting the uplink congestion status of the third object through the signaling corresponding to the third object and/or the data packet in the third object;
the second object comprises one or more of the following:
the first QoS flow;
a first radio bearer;
a first logical channel; and
a first logical channel group; and
the third object comprises one or more of the following:
the first QoS flow;
the first radio bearer;
the first logical channel; and
the first logical channel group.

16. The method according to claim 15, wherein the using a congestion status of the second object as a congestion status of a third object comprises at least one of the following:
determining, in a case that a congestion occurs in the second object, that a congestion occurs in the third object;
determining, in a case that the congestion in the second object ends, that the congestion in the third object ends;
determining, in a case that the congestion in the second object escalates, that the congestion in the third object escalates;
determining, in a case that the congestion in the second object de-escalates, that the congestion in the third object de-escalates; and
using congestion status information of the second object as congestion status information of the third object;
and/or
the using the uplink congestion status of the second object as an uplink congestion status of the third object comprises at least one of the following:
determining, in a case that an uplink congestion occurs in the second object, that an uplink congestion occurs in the third object;
determining, in a case that the uplink congestion in the second object ends, that the uplink congestion in the third object ends;
determining, in a case that the uplink congestion in the second object escalates, that the uplink congestion in the third object escalates;
determining, in a case that the uplink congestion in the second object de-escalates, that the uplink congestion in the third object de-escalates; and
using uplink congestion status information of the second object as uplink congestion status information of the third object.

17. The method according to claim 15, wherein
the reporting the uplink congestion status of the second object or reporting the uplink congestion status of the third object through the signaling corresponding to the third object comprises:
sending one of the following through an information element and/or a Uu interface message corresponding to the third object: congestion status information of the second object, congestion status information of the third object, uplink congestion status information of the second object, and uplink congestion status information of the third object;
or
the reporting the uplink congestion status of the second object or reporting the uplink congestion status of the third object through the data packet in the third object comprises at least one of the following:
making a packet header of an uplink data packet in the third object carry congestion status information;
making a packet header of the data packet in the third object carry uplink congestion status information; and
sending the data packet in the third object to a Uu interface, wherein
the congestion status information or the uplink congestion status information is information describing the uplink congestion status of the second object or the uplink congestion status of the third object; and
the Uu interface is an interface between a terminal and a radio access network.

18. The method according to claim 15, wherein
the first radio bearer comprises: a radio bearer to which the first QoS flow is mapped;
and/or
the first radio bearer and the first QoS flow have a one-to-one mapping, or QoS flows mapped to the first radio bearer all have congestion monitoring requirements;
and/or
the first logical channel comprises: a logical channel corresponding to the first radio bearer, and/or, a logical channel to which the first QoS flow is mapped;
and/or
the first logical channel group comprises: a logical channel group to which the first logical channel belongs.

19. The method according to any one of claims 15 to 17, wherein
the uplink congestion status comprises one or more of the following:
an uplink congestion starts or an uplink congestion occurs;
an uplink congestion ends or no uplink congestion occurs; and
a congestion level or an uplink congestion level;
the congestion status information and/or the uplink congestion status information comprises one or more of the following:
first information, configured for indicating that a congestion starts;
second information, configured for indicating that a congestion ends; and
third information, configured for indicating a congestion level;
and/or
the uplink congestion status information comprises one or more of the following:
fourth information, configured for indicating that an uplink congestion starts or an uplink congestion occurs;
fifth information, configured for indicating that an uplink congestion ends or no uplink congestion occurs; and
sixth information, configured for indicating a congestion level or an uplink congestion level.

20. The method according to claim 15, wherein the reporting the uplink congestion status of the second object or reporting the uplink congestion status of the third object through the data packet in the third object comprises one or more of the following:
sending first congestion status information in a case that a congestion occurs in the second object;
sending second congestion status information in a case that the congestion in the second object ends;
sending third congestion status information in a case that a congestion level of the second object changes;
sending the first congestion status information or fourth congestion status information in a case that an uplink congestion occurs in the second object;
sending the second congestion status information or fifth congestion status information in a case that the uplink congestion in the second object ends; and
reporting the third congestion status information or sixth congestion status information in a case that an uplink congestion level of the second object changes;
wherein
the first congestion status information comprises first information and/or third information;
the second congestion status information comprises second information;
the third congestion status information comprises the third information;
the fourth congestion status information comprises fourth information and/or sixth information;
the fifth congestion status information comprises fifth information; and
the sixth congestion status information comprises the sixth information.

21. The method according to claim 19 or 20, wherein that a congestion starts or a congestion occurs comprises at least one of the following: QoS cannot be met, a data sending rate is less than a data receiving rate of an N^{th} object, time domain resources are insufficient, a buffer overflows, and a queue overflows;
and/or
that a congestion starts or a congestion occurs in the N^{th} object comprises at least one of the following: QoS of the N^{th} object cannot be met, a data sending rate of the N^{th} object is less than the data receiving rate of the N^{th} object, time domain resources of the N^{th} object are insufficient, a buffer for the N^{th} object overflows, and a queue of the N^{th} object overflows, wherein
the N^{th} object is any one of the following: a first object, the second object, and the third object.

22. An information processing method, comprising:
performing, by a third communication device, a third operation, wherein
the third operation comprises one or more of the following:
mapping each QoS flow having a congestion monitoring requirement to an independent fourth object;
determining, based on whether a QoS flow has a congestion monitoring requirement, to map the QoS flow to a same fourth object or different fourth objects;
mapping one or more QoS flows having a congestion monitoring requirement to a same fourth object;
mapping one or more QoS flows having a congestion monitoring requirement to a target fourth object, wherein a QoS flow having no congestion monitoring requirement does not exist in the target fourth object;
determining and/or saving a congestion monitoring requirement of a fourth object, wherein the congestion monitoring requirement of the fourth object meets congestion monitoring requirements of all QoS flows mapped to the fourth object, or, is the same as congestion monitoring requirements of all QoS flows mapped to the fourth object; and
using a congestion status of the fourth object to which the QoS flow is mapped as a congestion status of the QoS flow,
wherein the fourth object comprises one or more of the following:
a radio bearer; and
a logical channel.

23. The method according to claim 22, wherein the determining, based on whether a QoS flow has a congestion monitoring requirement, to map the QoS flow to a same fourth object or different fourth objects comprises any one of the following:
mapping a QoS flow having a congestion monitoring requirement and a QoS flow having no congestion monitoring requirement to different fourth objects; and
mapping, in a case that a second condition is met, a plurality of QoS flows to a same fourth object, wherein the second condition comprises at least one of the following: the plurality of QoS flows all have congestion monitoring requirements, and the congestion monitoring requirements of the plurality of QoS flows are the same or compatible.

24. The method according to claim 22, wherein before the performing, by a third communication device, a third operation, the method further comprises:
acquiring, by the third communication device, a congestion monitoring requirement corresponding to the QoS flow; and
performing, by the third communication device, the third operation according to the congestion monitoring requirement corresponding to the QoS flow.

25. The method according to claim 22 or 23, wherein
that the QoS flow has the congestion monitoring requirement comprises: acquiring the congestion monitoring requirement corresponding to the QoS flow;
and/or
the congestion monitoring requirement corresponding to the QoS flow is configured for requiring one or more of the following:
monitoring and/or reporting the congestion status of the QoS flow;
monitoring and/or reporting the congestion status of the fourth object to which the QoS flow is mapped;
using the congestion status of the fourth object to which the QoS flow is mapped as the congestion status of the QoS flow; and
reporting the congestion status of the fourth object or reporting the congestion status of the QoS flow through signaling corresponding to the QoS flow and/or a data packet in the QoS flow;
and/or
a parameter in the congestion monitoring requirement corresponding to the QoS flow comprises one or more of the following:
information configured for indicating that uplink and/or downlink congestion monitoring requires to be performed, a reporting event, a reporting frequency, and information configured for describing a congestion level.

26. An information processing method, comprising:
performing, by a fourth communication device, a fourth operation, wherein
the fourth operation comprises one or more of the following:
mapping each service data flow having a congestion monitoring requirement to an independent QoS flow;
determining, based on whether a service data flow has a congestion monitoring requirement, to map the service data flow to a same QoS flow or different QoS flows;
mapping one or more service data flows having a congestion monitoring requirement to a same QoS flow;
mapping one or more service data flows having a congestion monitoring requirement to a target QoS flow, wherein a service data flow having no congestion monitoring requirement does not exist in the target QoS flow;
determining and/or saving a congestion monitoring requirement corresponding to the QoS flow, wherein the congestion monitoring requirement corresponding to the QoS flow meets congestion monitoring requirements of all service flows to which the QoS flow is mapped, or, is the same as congestion monitoring requirements of all service data flows to which the QoS flow is mapped;
using a congestion status of the QoS flow to which the service data flow is mapped as a congestion status of the service data flow; and
sending the congestion monitoring requirement corresponding to the QoS flow.

27. The method according to claim 26, wherein the determining, based on whether a service data flow has a congestion monitoring requirement, to map the service data flow to a same QoS flow or different QoS flows comprises any one of the following:
mapping a service data flow having a congestion monitoring requirement and a service data flow having no congestion monitoring requirement to different QoS flows; and
mapping, in a case that a third condition is met, a plurality of service data flows to a same QoS flow, wherein the third condition comprises at least one of the following: the plurality of service data flows all have congestion monitoring requirements, and the congestion monitoring requirements of the plurality of service data flows are the same or compatible.

28. The method according to claim 26, wherein before the performing, by a fourth communication device, a fourth operation, the method further comprises:
acquiring, by the fourth communication device, a congestion monitoring requirement corresponding to the service data flow; and
performing, by the fourth communication device, the fourth operation according to the congestion monitoring requirement corresponding to the service data flow.

29. The method according to claim 26 or 27, wherein
that the service data flow has the congestion monitoring requirement comprises: acquiring the congestion monitoring requirement corresponding to the service data flow;
and/or
the congestion monitoring requirement corresponding to the service data flow is configured for requiring one or more of the following:
monitoring and/or reporting the congestion status of the service data;
monitoring and/or reporting the congestion status of the QoS flow to which the service data is mapped; and
reporting the congestion status of the QoS flow or reporting the congestion status of the service data flow through signaling corresponding to the service data flow and/or a data packet in the service data flow;
and/or
the congestion monitoring requirement corresponding to the QoS flow is configured for requiring one or more of the following:
monitoring and/or reporting the congestion status of the QoS flow;
monitoring and/or reporting a congestion status of a fourth object to which the QoS flow is mapped; and
reporting the congestion status of the fourth object or the congestion status of the QoS flow through signaling corresponding to the QoS flow and/or a data packet in the QoS flow;
and/or
a parameter in the congestion monitoring requirement corresponding to the service data flow, or, a parameter in the congestion monitoring requirement corresponding to the QoS flow comprises one or more of the following:
information configured for indicating that uplink and/or downlink congestion monitoring requires to be performed, a reporting event, a reporting frequency, and information configured for describing a congestion level.

30. An information processing method, comprising:
performing, by a fifth communication device, a fifth operation, wherein
the fifth operation comprises at least one of the following:
determining a congestion monitoring requirement corresponding to a first QoS flow;
sending the congestion monitoring requirement corresponding to the first QoS flow;
determining a first requirement; and
sending the first requirement, wherein
the first requirement is an uplink congestion monitoring requirement corresponding to the first QoS flow, and/or, the first requirement is configured for requiring one or more of the following:
monitoring and/or reporting an uplink congestion status of a second object;
reporting the uplink congestion status of the second object through signaling corresponding to a third object and/or a data packet in the third object; and
using a congestion status of the second object as a congestion status of the third object; and
the second object comprises one or more of the following:
the first QoS flow;
a first radio bearer;
a first logical channel; and
a first logical channel group; and
the third object comprises one or more of the following:
the first QoS flow;
the first radio bearer;
the first logical channel; and
the first logical channel group.

31. The method according to claim 30, wherein the congestion monitoring requirement corresponding to the first QoS flow is configured for requiring one or more of the following:
monitoring and/or reporting a congestion status of the first QoS flow;
monitoring and/or reporting a congestion status of a first object; and
reporting the congestion status of the first object or reporting the congestion status of the first QoS flow through signaling corresponding to the first QoS flow and/or a data packet in the first QoS flow;
and/or
a parameter in the congestion monitoring requirement corresponding to the first QoS flow comprises one or more of the following:
information configured for indicating that uplink and/or downlink congestion monitoring requires to be performed, a reporting event, a reporting frequency, and information configured for describing a congestion level.

32. The method according to claim 31, wherein the first object comprises one or more of the following:
the first QoS flow;
the first radio bearer;
the first logical channel;
the first logical channel group;
a first cell; and
a first communication device or a first RAN network element.

33. The method according to claim 30, wherein the step of performing a fifth operation comprises: acquiring a congestion monitoring requirement corresponding to a first service data flow, and performing the fifth operation according to the congestion monitoring requirement corresponding to the first service data flow, wherein
the first service data flow is a service data flow to which the first QoS flow is mapped.

34. The method according to claim 33, wherein the congestion monitoring requirement corresponding to the first service data flow is configured for requiring one or more of the following:
monitoring and/or reporting a congestion status of the first service data;
monitoring and/or reporting the congestion status of the first QoS flow; and
reporting the congestion status of the first QoS flow or reporting the congestion status of the first service data flow through signaling corresponding to the first service data flow and/or a data packet in the service data flow.

35. An information processing method, comprising:
acquiring, by a sixth communication device, congestion status information of a first QoS flow; and
performing, by the sixth communication device, a sixth operation based on the congestion status information of the first QoS flow, wherein
the sixth operation comprises at least one of the following:
determining a congestion status of a first service data flow; and
sending congestion status information of the first service data flow, wherein
the first service data flow is a service data flow to which the first QoS flow is mapped.

36. The method according to claim 35, wherein the determining, by the sixth communication device, a congestion status of a first service data flow based on the congestion status information of the first QoS flow comprises at least one of the following:
determining, in a case that a congestion occurs in the first QoS flow, that a congestion occurs in the first service data flow;
determining, in a case that the congestion in the first QoS flow ends, that the congestion in the first service data flow ends;
determining, in a case that the congestion in the first QoS flow escalates, that the congestion in the first service data flow escalates;
determining, in a case that the congestion in the first QoS flow de-escalates, that the congestion in the first service data flow de-escalates; and
using the congestion status information of the first QoS flow as the congestion status information of the first service data flow.

37. The method according to claim 35, wherein
the determining, in a case that a congestion occurs in the first QoS flow, that a congestion occurs in the first service data flow comprises at least one of the following: determining, in a case that an uplink congestion occurs in the first QoS flow, that an uplink congestion occurs in the first service data flow; and determining, in a case that a downlink congestion occurs in the first QoS flow, that a downlink congestion occurs in the first service data flow;
the determining, in a case that the congestion in the first QoS flow ends, that the congestion in the first service data flow ends comprises at least one of the following: determining, in a case that the uplink congestion in the first QoS flow ends, that the uplink congestion in the first service data flow ends; and determining, in a case that the downlink congestion in the first QoS flow ends, that the downlink congestion in the first service data flow ends;
the determining, in a case that the congestion in the first QoS flow escalates, that the congestion in the first service data flow escalates comprises at least one of the following: determining, in a case that the uplink congestion in the first QoS flow escalates, that the uplink congestion in the first service data flow escalates; and determining, in a case that the downlink congestion in the first QoS flow escalates, that the downlink congestion in the first service data flow escalates;
the determining, in a case that the congestion in the first QoS flow de-escalates, that the congestion in the first service data flow de-escalates comprises at least one of the following: determining, in a case that the uplink congestion in the first QoS flow de-escalates, that the uplink congestion in the first service data flow de-escalates; and determining, in a case that the downlink congestion in the first QoS flow de-escalates, that the downlink congestion in the first service data flow de-escalates; and
the using the congestion status information of the first QoS flow as the congestion status information of the first service data flow comprises at least one of the following: using the uplink congestion status information of the first QoS flow as uplink congestion status information of the first service data flow; and using downlink congestion status information of the first QoS flow as downlink congestion status information of the first service data flow.

38. The method according to any one of claims 35 to 37, wherein
the congestion status comprises one or more of the following:
a congestion starts or a congestion occurs;
a congestion ends or no congestion occurs; and
a congestion level;
and/or
the uplink congestion status comprises one or more of the following:
an uplink congestion starts or an uplink congestion occurs;
an uplink congestion ends or no uplink congestion occurs; and
a congestion level or an uplink congestion level;
and/or
the downlink congestion status comprises one or more of the following:
a downlink congestion starts or a downlink congestion occurs;
a downlink congestion ends or no downlink congestion occurs; and
a congestion level or an uplink congestion level;
and/or
the congestion status information, downlink congestion status information, and/or uplink congestion status information comprises one or more of the following:
first information, configured for indicating that a congestion starts or a congestion occurs;
second information, configured for indicating that a congestion ends or no congestion occurs; and
third information, configured for indicating a congestion level;
and/or
the uplink congestion status information comprises one or more of the following:
fourth information, configured for indicating that an uplink congestion starts or an uplink congestion occurs;
fifth information, configured for indicating that an uplink congestion ends or no uplink congestion occurs; and
sixth information, configured for indicating a congestion level or an uplink congestion level;
and/or
the downlink congestion status information comprises one or more of the following:
seventh information, configured for indicating that a downlink congestion starts or a downlink congestion occurs;
eighth information, configured for indicating that a downlink congestion ends or no downlink congestion occurs; and
ninth information, configured for indicating a congestion level or a downlink congestion level.

39. The method according to claim 38, wherein the method further comprises at least one of the following:
determining, in a case that a fourth condition is met, that an uplink congestion occurs in the first QoS flow, wherein
the fourth condition comprises: an uplink data packet in the first QoS flow carries the first information and/or the third information, and the fourth information or the sixth information is received;
determining, in a case that a fifth condition is met, that a downlink congestion occurs in the first QoS flow, wherein
the fifth condition comprises: a downlink data packet in the first QoS flow carries the first information and/or the third information, the uplink data packet in the first QoS flow carries the seventh information and/or the ninth information, and the seventh information and/or the ninth information is received through signaling;
determining, in a case that a sixth condition is met, that the uplink congestion in the first service data flow ends, wherein
the sixth condition comprises: the uplink data packet in the first QoS flow carries the second information, and the fifth information is received;
determining, in a case that a seventh condition is met, that the downlink congestion in the first QoS flow ends, wherein
the seventh condition comprises: the downlink data packet in the first QoS flow carries the second information, the uplink data packet in the first QoS flow carries the eighth information, and the eighth information is received through signaling;
determining, in a case that an eighth condition is met, that the uplink congestion in the first service data flow escalates, wherein
the eighth condition comprises: the uplink data packet in the first QoS flow carries the first information and/or the third information, and the fourth information or the sixth information is received;
determining, in a case that a ninth condition is met, that the downlink congestion in the first QoS flow escalates, wherein
the ninth condition comprises: the downlink data packet in the first QoS flow carries the first information and/or the third information, the uplink data packet in the first QoS flow carries the seventh information and/or the ninth information, and the seventh information and/or the ninth information is received through signaling;
determining, in a case that a tenth condition is met, that the uplink congestion in the first service data flow de-escalates, wherein
the tenth condition comprises: the uplink data packet in the first QoS flow carries the first information and/or the third information, and the fourth information or the sixth information is received;
determining, in a case that an eleventh condition is met, that the downlink congestion in the first QoS flow de-escalates, wherein
the eleventh condition comprises: the downlink data packet in the first QoS flow carries the first information and/or the third information, the uplink data packet in the first QoS flow carries the seventh information and/or the ninth information, and the seventh information and/or the ninth information is received through signaling;
determining, in a case that a twelfth condition is met, the uplink congestion status information of the first QoS flow, wherein
the twelfth condition comprises: the uplink data packet in the first QoS flow carries the first information, the second information, and/or the third information, and the fourth information, the fifth information, or the sixth information is received; and
determining, in a case that a thirteenth condition is met, the uplink congestion status information of the first QoS flow, wherein
the thirteenth condition comprises: the downlink data packet in the first QoS flow carries the first information, the second information, and/or the third information, the uplink data packet in the first QoS flow carries the seventh information, the eighth information, and/or the ninth information, and the seventh information, the eighth information, and/or the ninth information is received through signaling.

40. The method according to claim 35, wherein the acquiring, by a sixth communication device, congestion status information of a first QoS flow comprises:
acquiring, by the sixth communication device, congestion status information of a first object or the congestion status information of the first QoS flow through signaling corresponding to the first QoS flow and/or a data packet in the first QoS flow, wherein
the first object comprises one or more of the following:
a first radio bearer;
a first logical channel;
a first logical channel group;
a first cell; and
a first communication device or a first RAN network element.

41. The method according to claim 40, wherein
the acquiring, by the sixth communication device, congestion status information of a first object or the congestion status information of the first QoS flow through signaling corresponding to the first QoS flow comprises:
acquiring, by the sixth communication device, the congestion status information of the first object or the congestion status information of the first QoS flow through an information element corresponding to the first QoS flow and/or a first interface message, wherein
or
the acquiring, by the sixth communication device, congestion status information of a first object or the congestion status information of the first QoS flow through a data packet in the first QoS flow comprises:
acquiring, by the sixth communication device, the congestion status information of the first object or the congestion status information of the first QoS flow through the congestion status information of the first object carried in a packet header of the data packet in the first QoS flow,
wherein
a first interface is a control plane interface between a core network and an access network; and
a second interface is a user plane interface between the core network and the access network.

42. The method according to claim 41, wherein
the acquiring the congestion status information of the first object or the congestion status information of the first QoS flow through the congestion status information of the first object carried in a packet header of the data packet in the first QoS flow comprises:
acquiring congestion status information through a packet header of an uplink data packet in the first QoS flow, wherein the congestion status information is information describing an uplink congestion status of the first object or an uplink congestion status of the first QoS flow;
acquiring congestion status information through a packet header of a downlink data packet in the first QoS flow, wherein the congestion status information is information describing a downlink congestion status of the first object or a downlink congestion status of the first QoS flow;
acquiring uplink congestion status information through the packet header of the uplink data packet in the first QoS flow, wherein the uplink congestion status information is the information describing the uplink congestion status of the first object or the uplink congestion status of the first QoS flow; and
acquiring downlink congestion status information through the packet header of the uplink data packet in the first QoS flow, wherein the downlink congestion status information is the information describing the downlink congestion status of the first object or the downlink congestion status of the first QoS flow.

43. The method according to claim 41, wherein the performing, by the sixth communication device, a sixth operation based on the congestion status information of the first QoS flow comprises:
acquiring a congestion monitoring requirement corresponding to the first QoS flow, and/or, a congestion monitoring requirement corresponding to the first service data flow, and
according to the congestion monitoring requirement corresponding to the first QoS flow, and/or, the congestion monitoring requirement corresponding to the first service data flow, performing: performing, by the sixth communication device, the sixth operation based on the congestion status information of the first QoS flow.

44. The method according to claim 43, wherein the congestion monitoring requirement corresponding to the first service data flow is configured for requiring one or more of the following:
monitoring and/or reporting a congestion status of the first service data;
monitoring and/or reporting a congestion status of the first QoS flow; and
reporting the congestion status of the first QoS flow or reporting the congestion status of the first service data flow through signaling corresponding to the first service data flow and/or a data packet in the service data flow.

45. A communication device, wherein the communication device is a first communication device, and comprises:
a first acquisition module, configured to acquire a congestion monitoring requirement corresponding to a first QoS flow; and
a first execution module, configured to perform a first operation according to the congestion monitoring requirement corresponding to the first QoS flow, wherein
the first operation comprises one or more of the following:
monitoring a congestion status of a first object;
using the congestion status of the first object as a congestion status of the first QoS flow;
reporting the congestion status of the first object or reporting the congestion status of the first QoS flow through signaling corresponding to the first QoS flow and/or a data packet in the first QoS flow;
mapping the first QoS flow to a first radio bearer; and
sending a first requirement, wherein
the first requirement is an uplink congestion monitoring requirement corresponding to the first QoS flow, and/or, the first requirement is configured for requiring one or more of the following:
monitoring and/or reporting an uplink congestion status of a second object;
reporting the uplink congestion status of the second object through signaling corresponding to a third object and/or a data packet in the third object; and
using a congestion status of the second object as a congestion status of the third object;
the first object comprises one or more of the following:
the first QoS flow;
the first radio bearer;
a first logical channel;
a first logical channel group;
a first cell; and
the first communication device or a first radio access network RAN network element;
the second object comprises one or more of the following:
the first QoS flow;
the first radio bearer;
the first logical channel; and
the first logical channel group; and
the third object comprises one or more of the following:
the first QoS flow;
the first radio bearer;
the first logical channel; and
the first logical channel group.

46. A communication device, wherein the communication device is a second communication device, and comprises:
a second acquisition module, configured to acquire a first requirement; and
a second execution module, configured to perform a second operation according to the first requirement, wherein
the first requirement is an uplink congestion monitoring requirement corresponding to a first QoS flow, and/or, the first requirement is configured for requiring one or more of the following:
monitoring and/or reporting an uplink congestion status of a second object;
using a congestion status of the second object as a congestion status of the third object; and
reporting the uplink congestion status of the second object or reporting the congestion status of the third object through signaling corresponding to the third object and/or a data packet in the third object;
the second operation comprises one or more of the following:
monitoring the uplink congestion status of the second object;
using the uplink congestion status of the second object as an uplink congestion status of a third object; and
reporting the uplink congestion status of the second object or reporting the uplink congestion status of the third object through the signaling corresponding to the third object and/or the data packet in the third object;
the second object comprises one or more of the following:
the first QoS flow;
a first radio bearer;
a first logical channel; and
a first logical channel group; and
the third object comprises one or more of the following:
the first QoS flow;
the first radio bearer;
the first logical channel; and
the first logical channel group.

47. A communication device, wherein the communication device is a third communication device, and comprises:
a third execution module, configured to perform a third operation, wherein
the third operation comprises one or more of the following:
mapping each QoS flow having a congestion monitoring requirement to an independent fourth object;
determining, based on whether a QoS flow has a congestion monitoring requirement, to map the QoS flow to a same fourth object or different fourth objects;
mapping one or more QoS flows having a congestion monitoring requirement to a same fourth object;
mapping one or more QoS flows having a congestion monitoring requirement to a target fourth object, wherein a QoS flow having no congestion monitoring requirement does not exist in the target fourth object;
determining and/or saving a congestion monitoring requirement of a fourth object, wherein the congestion monitoring requirement of the fourth object meets congestion monitoring requirements of all QoS flows mapped to the fourth object, or, is the same as congestion monitoring requirements of all QoS flows mapped to the fourth object; and
using a congestion status of the fourth object to which the QoS flow is mapped as a congestion status of the QoS flow, wherein
the fourth object comprises one or more of the following:
a radio bearer; and
a logical channel.

48. A communication device, wherein the communication device is a fourth communication device, and comprises:
a fourth execution module, configured to perform a fourth operation, wherein
the fourth operation comprises one or more of the following:
mapping each service data flow having a congestion monitoring requirement to an independent QoS flow;
determining, based on whether a service data flow has a congestion monitoring requirement, to map the service data flow to a same QoS flow or different QoS flows;
mapping one or more service data flows having a congestion monitoring requirement to a same QoS flow;
mapping one or more service data flows having a congestion monitoring requirement to a target QoS flow, wherein a service data flow having no congestion monitoring requirement does not exist in the target QoS flow;
determining and/or saving a congestion monitoring requirement corresponding to the QoS flow, wherein the congestion monitoring requirement corresponding to the QoS flow meets congestion monitoring requirements of all service flows to which the QoS flow is mapped, or, is the same as congestion monitoring requirements of all service data flows to which the QoS flow is mapped;
using a congestion status of the QoS flow to which the service data flow is mapped as a congestion status of the service data flow; and
sending the congestion monitoring requirement corresponding to the QoS flow.

49. A communication device, wherein the communication device is a fifth communication device, and comprises:
a fifth execution module, configured to perform a fifth operation, wherein
the fifth operation comprises at least one of the following:
determining a congestion monitoring requirement corresponding to a first QoS flow;
sending the congestion monitoring requirement corresponding to the first QoS flow;
determining a first requirement; and
sending the first requirement, wherein
the first requirement is an uplink congestion monitoring requirement corresponding to the first QoS flow, and/or, the first requirement is configured for requiring one or more of the following:
monitoring and/or reporting an uplink congestion status of a second object;
reporting the uplink congestion status of the second object through signaling corresponding to a third object and/or a data packet in the third object; and
using a congestion status of the second object as a congestion status of the third object;
the second object comprises one or more of the following:
the first QoS flow;
a first radio bearer;
a first logical channel; and
a first logical channel group; and
the third object comprises one or more of the following:
the first QoS flow;
the first radio bearer;
the first logical channel; and
the first logical channel group.

50. A communication device, wherein the communication device is a sixth communication device, and comprises:
a third acquisition module, configured to acquire congestion status information of a first QoS flow; and
a sixth execution module, configured to perform a sixth operation based on the congestion status information of the first QoS flow, wherein
the sixth operation comprises at least one of the following:
determining a congestion status of a first service data flow; and
sending congestion status information of the first service data flow, wherein
the first service data flow is a service data flow to which the first QoS flow is mapped.

51. A communication device, comprising a processor, a memory, and a computer program stored in the memory and executable on the processor, wherein the computer program, when being executed by the processor, implements the steps of the information processing method according to any one of claims 1 to 14, or implements the steps of the information processing method according to any one of claims 15 to 21, or implements the steps of the information processing method according to any one of claims 22 to 25, or implements the steps of the information processing method according to any one of claims 26 to 29, or implements the steps of the information processing method according to any one of claims 30 to 34, or implements the steps of the information processing method according to any one of claims 35 to 44.

52. A computer-readable storage medium, wherein the computer-readable storage medium stores a computer program, and the computer program, when being executed by a processor, implements the steps of the information processing method according to any one of claims 1 to 14, or implements the steps of the information processing method according to any one of claims 15 to 21, or implements the steps of the information processing method according to any one of claims 22 to 25, or implements the steps of the information processing method according to any one of claims 26 to 29, or implements the steps of the information processing method according to any one of claims 30 to 34, or implements the steps of the information processing method according to any one of claims 35 to 44.
